# EUROPEAN PATENT APPLICATION

(11) **EP 4 336 964 A2**
(43) Date of publication of application: **13.03.2024**
(21) Application number: 24154505.2
(22) Date of filing: 28.01.2022
(51) Int. Cl.: H04W 88/06

(54) **INTER-SECONDARY NODE CONDITIONAL CELL CHANGE AND MEASUREMENT CONFIGURATION**

(30) Priority: 02.02.2021 US 202163144950 P
(62) Divisional of application: 22704020.1
(71) Applicant: Telefonaktiebolaget LM Ericsson (publ), 164 83 Stockholm (SE)
(72) Inventor: Da Silva, Icaro Leonardo, 170 77 SOLNA (SE); Eklöf, Cecilia, 187 41 Täby (SE); Muller, Julien, 35700 RENNES (FR)
(74) Representative: Ericsson

(57) **Abstract**

Systems and methods are disclosed herein that relate to inter-Secondary Node (SN) conditional cell change and measurement configuration. In one embodiment, a method for configuring measurements related to inter-SN conditional reconfiguration comprises, at a Source Secondary Node (S-SN), sending, to a Master Node (MN), a first message comprising an indication that the first message is for conditional reconfiguration and information about one or more target candidate cells of a target candidate SN. The method further comprises, at the MN, receiving the first message from the S-SN and sending a second message to the target candidate SN, the second message being a request for SN addition and comprising an indication that the second message is for conditional reconfiguration and information about the one or more target candidate cells of the target candidate SN.

## Description

### Related Applications

This application claims the benefit of provisional patent application serial number 63/144,950, filed February 2, 2021, the disclosure of which is hereby incorporated herein by reference in its entirety.

### Technical Field

The present disclosure relates to inter-Secondary Node (SN) conditional reconfiguration and associated measurement configuration in a cellular communications network.

### Background

### Conditional PSCell Change (CPC) Rel-16

A solution for Conditional Primary Secondary Cell (PSCell) Change (CPC) procedure was standardized in Third Generation Partnership Project (3GPP) Release 16 (Rel-16). Therein, a User Equipment (UE) operating in Multi-Radio Dual Connectivity (MR-DC) receives, in a conditional reconfiguration, one or multiple Radio Resource Control (RRC) Reconfiguration(s) (e.g. an *RRCReconfiguration* message) containing a Secondary Cell Group (SCG) configuration (e.g. an *secondaryCe*//*Group* of Information Element (IE) *CellGroupConfig)* with a *reconfigurationWithSync* that is stored and associated to an execution condition (e.g. a condition like an A3/A5 event configuration). One of the stored messages is applied only upon the fulfillment of the execution condition, e.g. associated with the serving PSCell, upon which the UE would perform PSCell change (in case it find a neighbor cell that is better than the current Special Cell (SpCell) of the SCG). In the following, some of the steps of CPC Rel-16 as standardized in 3GPP Technical Specification (TS) 37.340 (see, e.g., V16.4.0) are shown, for intra-Secondary Node (SN) CPC.

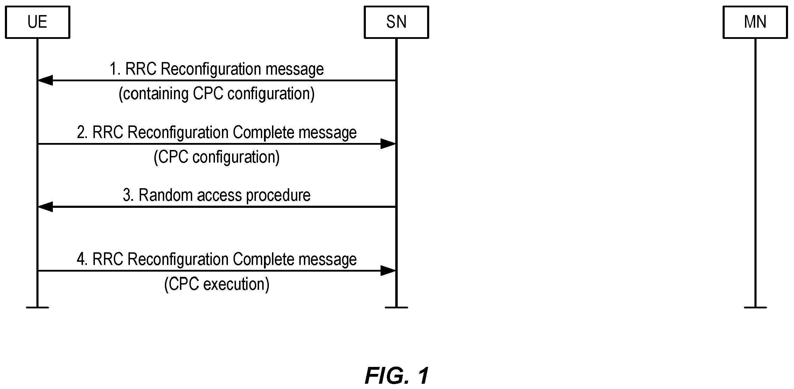

Figure 1 is a flow diagram illustrating SN initiated Conditional SN Modification (CPC) without Master Node (MN) involvement (Signaling Radio Bearer (SRB) 3 (SRB3) is used). This procedure is supported for the MR-DC options except for New Radio (NR) Evolved Universal Terrestrial Radio Access (E-UTRA) Dual Connectivity (NE-DC). The SN initiates the procedure when it needs to transfer an NR RRC message to the UE and SRB3 is used and CPC is configured. As illustrated in Figure 1, the steps of the procedure are as follows:
1. The SN sends the *SN RRC reconfiguration* including CPC configuration message to the UE through SRB3.
2. The UE applies the new configuration. The UE starts evaluating the CPC execution conditions for the candidate PSCell(s). The UE maintains connection with the source PSCell and replies with the *RRCReconfigurationComplete* message to the SN via SRB3.
3. If at least one CPC candidate PSCell satisfies the corresponding CPC execution condition, the UE detaches from the source PSCell, applies the stored configuration corresponding to that selected candidate PSCell, and synchronizes to that candidate PSCell.
4. The UE completes the CPC execution procedure by sending an *RRCReconfigurationComplete* message to the new PSCell.

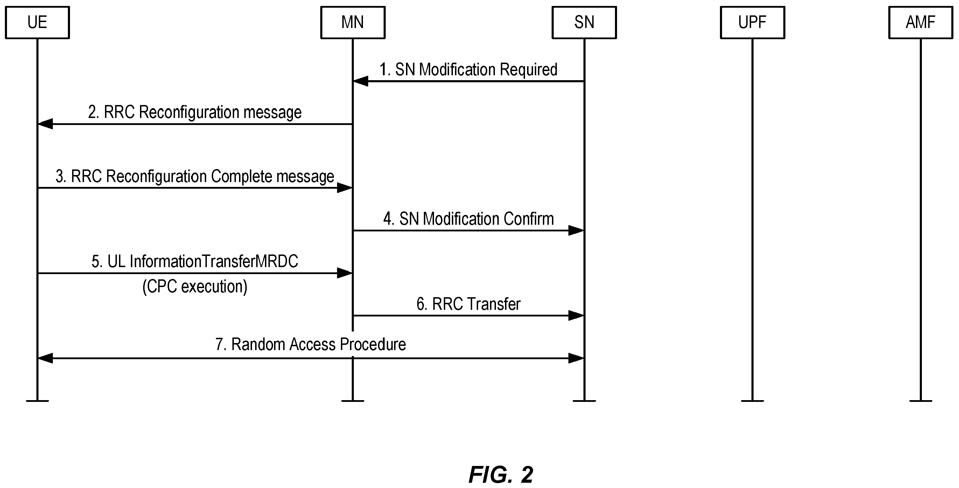

Figure 2 is a flow diagram illustrating SN initiated Conditional SN Modification (CPC) without MN involvement (SRB3 is not used). This procedure is supported for the MR-DC options except for NE-DC. The SN initiates the procedure when it needs to transfer an NR RRC message to the UE and SRB3 is not used, while CPC is configured. As illustrated in Figure 2, the steps of the procedure are as follows:
1. The SN initiates the procedure by sending the *SN Modification Required to* the MN including the SN RRC reconfiguration message with CPC configuration.
2. The MN forwards the SN RRC reconfiguration message to the UE including it in the *RRC reconfiguration* message.
3. The UE replies with the *RRCReconfigurationComplete* message by including the SN RRC reconfiguration complete message. The UE maintains connection with source PSCell after receiving CPC configuration and starts evaluating the CPC execution conditions for the candidate PSCell(s).
4. The MN forwards the SN RRC response message, if received from the UE, to the SN by including it in the *SN Modification Confirm* message.
5. If at least one CPC candidate PSCell satisfies the corresponding CPC execution condition, the UE completes the CPC execution procedure by an *ULInformationTransferMRDCmessage* to the MN which includes an embedded *RRCReconfigurationComplete* message to the selected target PSCell.
6. The *RRCReconfigurationComplete* is forwarded to the SN embedded in RRC Transfer.
7. The UE detaches from the source PSCell, applies the stored corresponding configuration and synchronizes to the selected candidate PSCell.

In 3GPP Release 17 (Rel-17), it has been agreed to extend CPC to the inter-SN case. So far, the following has been agreed in RAN2#112e:

### Bulk Agreement

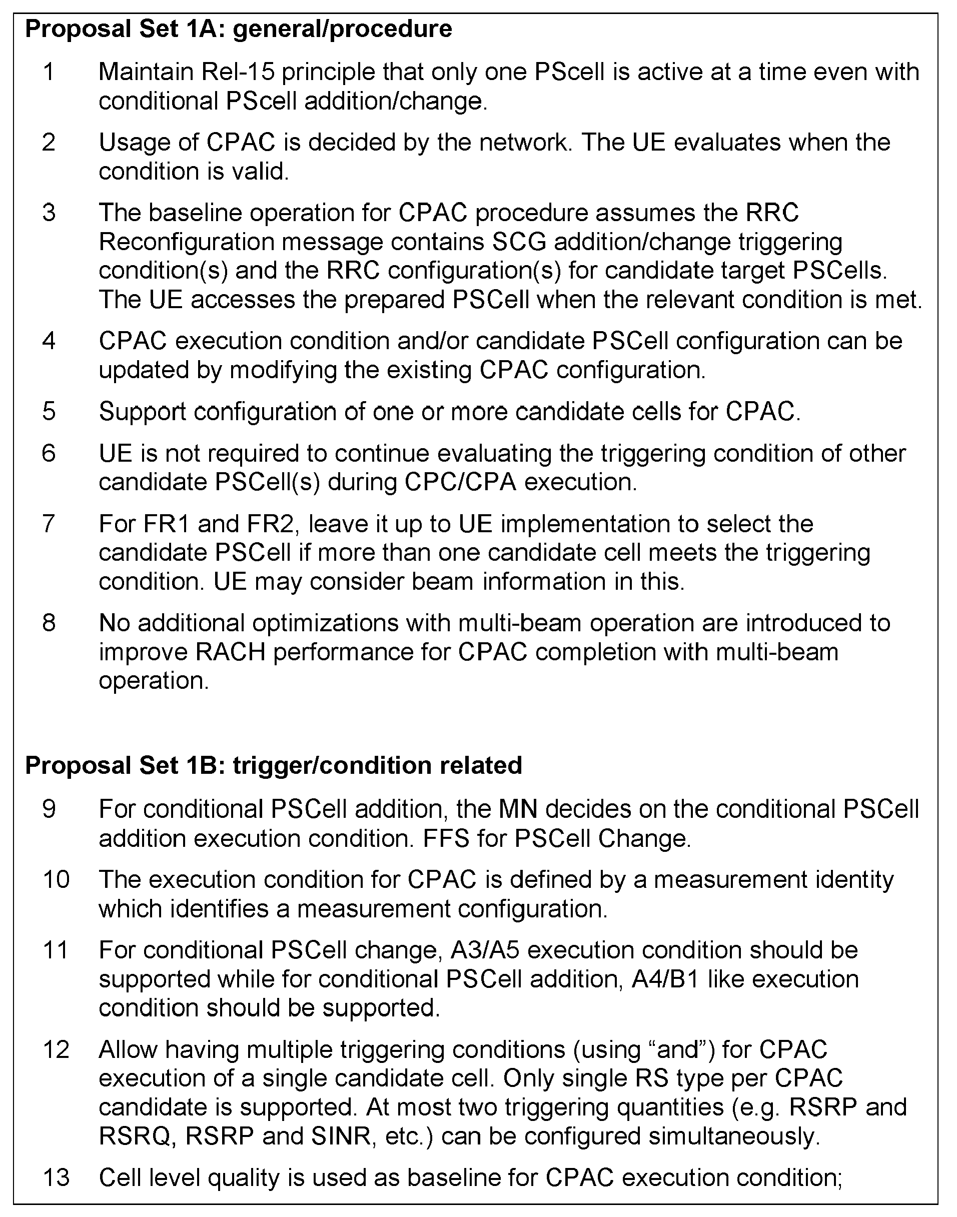

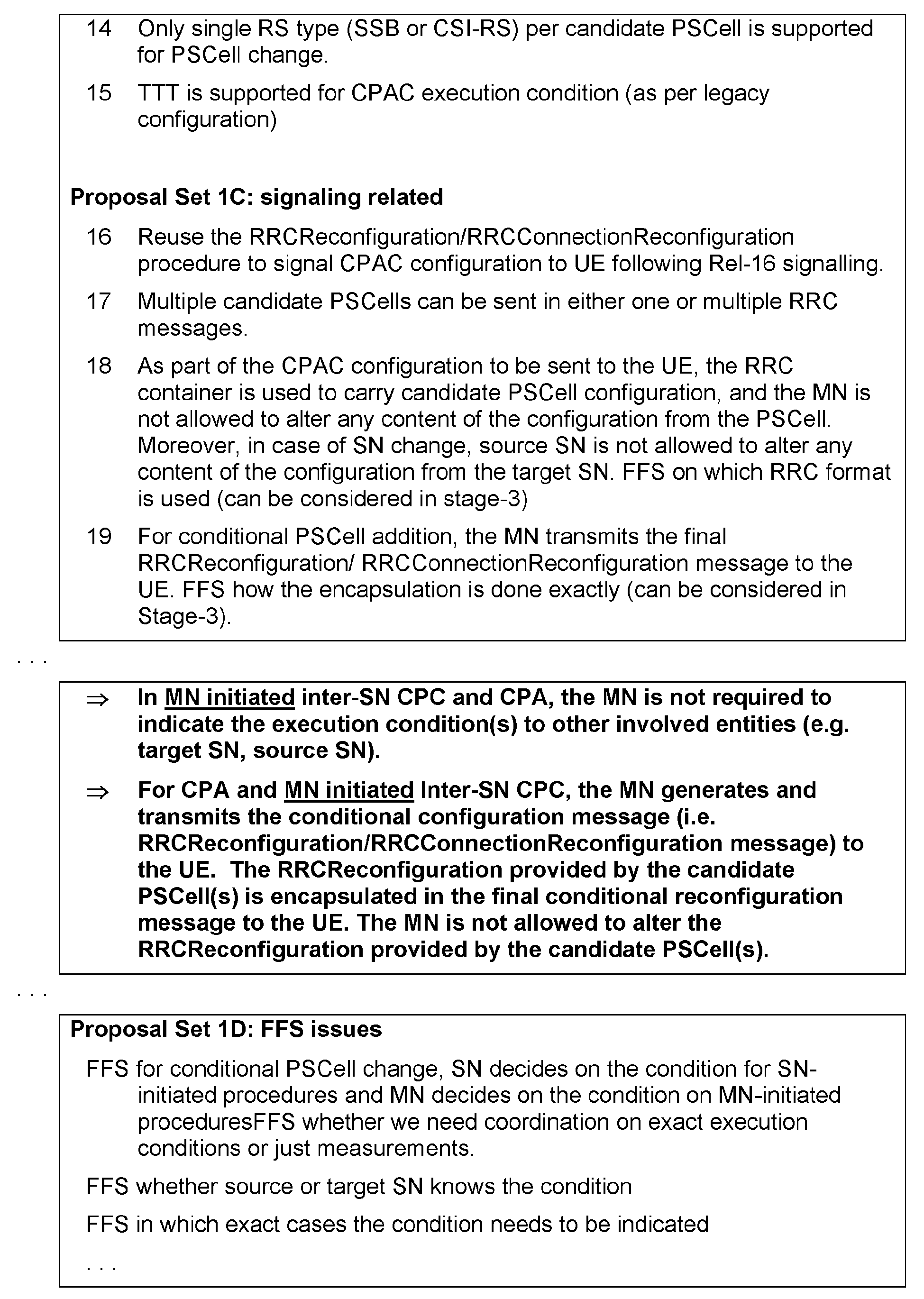

### Measurement Gaps Coordination in MR-DC

Per-UE or per-frequency range (FR) measurement gaps can be configured, depending on UE capability to support independent FR measurement and network preference. Per-UE gap applies to both Frequency Range 1 (FR1) (E-UTRA, UTRA-Frequency Division Duplexing (FDD), and NR) and Frequency Range 2 (FR2) (NR) frequencies. For per-FR measurement gap configuration, two independent gap patterns (i.e., FR1 gap and FR2 gap) are configured for FR1 and FR2 respectively. The UE may also be configured with a per-UE gap sharing configuration (applying to per-UE gap) or with two separate gap sharing configurations (applying to FR1 and FR2 measurement gaps respectively).

A measurement gap configuration is always provided:
- In E-UTRAN NR Dual Connectivity (EN-DC), Next Generation (NG) RAN E-UTRA NR Dual Connectivity (NGEN-DC), and NE-DC, for UEs configured with E-UTRA inter-frequency measurements as described in table 9.1.2-2 in 3GPP TS 38.133;
- In EN-DC and NGEN-DC, for UEs configured with Universal Terrestrial Radio Access Network (UTRAN) and Global System for Mobile communications (GSM) / Enhanced Data rates for GSM Evolution (EDGE) RAN (GERAN) measurements as described in table 9.1.2-2 in 3GPP TS 38.133;
- In NR Dual Connectivity (NR-DC), for UEs configured with Evolved Universal Terrestrial Radio Access Network (E-UTRAN) measurements as described in table 9.1.2-3 in 3GPP TS 38.133;
- In NR-DC, NE-DC, for UEs configured with UTRAN measurements as described in table 9.4.6.3-1 and 9.4.6.3-2 in 3GPP TS 38.133; and
- In MR-DC, for UEs that support either per-UE or per-FR gaps, when the conditions to measure Synchronization Signal Block (SSB) based inter-frequency measurement or SSB based intra-frequency measurement as described in clause 9.2.4 in 3GPP TS 38.300 are met.

If per-UE gap is used, the MN decides the gap pattern and the related gap sharing configuration. If per-FR gap is used, in EN-DC and NGEN-DC, the MN decides the FR1 gap pattern and the related gap sharing configuration for FR1, while the SN decides the FR2 gap pattern and the related gap sharing configuration for FR2; in NE-DC and NR-DC, the MN decides both the FR1 and FR2 gap patterns and the related gap sharing configurations.

In EN-DC and NGEN-DC, the measurement gap configuration from the MN to the UE indicates if the configuration from the MN is a per-UE gap or an FR1 gap configuration. The MN also indicates the configured per-UE or FR1 measurement gap pattern and the gap purpose (per-UE or per-FR1) to the SN. Measurement gap configuration assistance information can be exchanged between the MN and the SN. For the case of per-UE gap, the SN indicates to the MN the list of SN configured frequencies in FR1 and FR2 measured by the UE. For the per-FR gap case, the SN indicates to the MN the list of SN configured frequencies in FR1 measured by the UE and the MN indicates to the SN the list of MN configured frequencies in FR2 measured by the UE.

In NE-DC, the MN indicates the configured per-UE or FR1 measurement gap pattern to the SN. The SN can provide a gap request to the MN, without indicating any list of frequencies.

In NR-DC, the MN indicates the configured per-UE, FR1 or FR2 measurement gap pattern and the gap purpose to the SN. The SN can indicate to the MN the list of SN configured frequencies in FR1 and FR2 measured by the UE.

In (NG)EN-DC and NR-DC, SMTC can be used for PSCell addition/PSCell change to assist the UE in finding the SSB in the target PSCell. In case the SMTC of the target PSCell is provided by both MN and SN it is up to UE implementation which one to use.

Measurement gap coordination is assisted by inter-node RRC messages, as follows:
*CG-Configlnfo:* This message is used by master evolved Node B (eNB) or next generation Node B (gNB) to request the Secondary gNB (SgNB) or Secondary eNB (SeNB) to perform certain actions, e.g. to establish, modify or release a Secondary Cell Group (SCG). The message may include additional information, e.g. to assist the SgNB or SeNB to set the SCG configuration. In the case of Central Unit (CU) / Distributed Unit (DU) split, it can also be used by a CU to request a DU to perform certain actions, e.g. to establish or modify a Master Cell Group (MCG) or SCG.

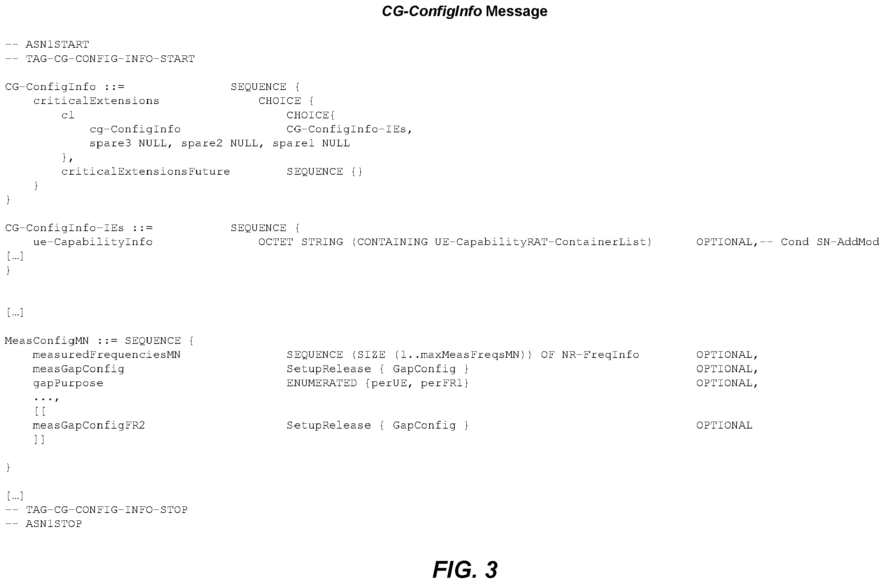

Figure 3 illustrates a traditional *CG-Configlnfo* message. The direction of the message is master eNB or gNB to secondary gNB or eNB, alternatively CU to DU. Field descriptions are as follows:

| ***CG-ConrigInfo* field descriptions** |
|---|
| measGapConfig |
| Indicates the FR1 and perUE measurement gap configuration configured by MN. |
| measGapConfigFR2 |
| Indicates the FR2 measurement gap configuration configured by MN. |

### Summary

Systems and methods are disclosed herein that relate to inter-Secondary Node (SN) conditional cell change and measurement configuration. In one embodiment, a method for configuring measurements related to inter-SN conditional reconfiguration comprises, at a Source Secondary Node (S-SN), sending, to a Master Node (MN), a first message comprising an indication that the first message is for conditional reconfiguration and information about one or more target candidate cells of a target candidate SN. The method further comprises, at the MN, receiving the first message from the S-SN and sending a second message to the target candidate SN, the second message being a request for SN addition and comprising an indication that the second message is for conditional reconfiguration and information about the one or more target candidate cells of the target candidate SN. In this manner, the network is enabled to use the information about the target candidate cells, and ultimately information about select target candidate cells, to enable measurement configuration for conditional reconfiguration at a User Equipment (UE) in a manner in which there is low risk for configuration mismatch between the UE and the network and energy is not wasted at the UE by performing unnecessary measurements.

In on embodiment, the first message comprises a Secondary Cell Group (SCG) measurement configuration for conditional reconfiguration. In one embodiment, the method further comprises, at the target candidate SN, receiving the second message from the MN and sending a third message to the MN, the third message comprising information about one or more select target candidate cells from among the one or more target candidate cells of the target candidate SN. The method further comprises, at the MN, receiving the third message from the target candidate SN and determining whether there is a need for a second procedure for updating the SCG measurement configuration based on the information comprised in the third message. In one embodiment, the method further comprises, at the MN, responsive to determining there is not a need for the second procedure for updating the SCG measurement configuration, sending a fourth message to a UE, the fourth message comprising the SCG measurement configuration for conditional reconfiguration. In another embodiment, responsive to determining there is a need for the second procedure for updating the SCG measurement configuration, communicating with the S-SN to perform the second procedure for updating the SCG measurement configuration to thereby obtain an updated SCG measurement configuration and sending a fourth message to a UE, the fourth message comprising the updated SCG measurement configuration for conditional reconfiguration.

In another embodiment, the method further comprises, at the target candidate SN, receiving the second message from the MN and sending a third message to the MN, the third message comprising information about one or more select target candidate cells from among the one or more target candidate cells of the target candidate SN. The method further comprises, at the MN, receiving the third message from the target candidate SN and sending a fourth message to the S-SN, the fourth message comprising the information about one or more select target candidate cells. The method further comprises, at the S-SN, receiving the fourth message from the MN and sending, based on the information about the one or more select target candidate cells, a fifth message to the MN, the fifth message comprising measurement configuration information related to the conditional reconfiguration. The method further comprises, at the MN, receiving the fifth message from the S-SN and sending a sixth message to a UE, the sixth message comprising the measurement configuration information related to the conditional reconfiguration. In this manner, configuration is provided with low risk for configuration mismatch between the UE and the network.

In one embodiment, the method further comprises, at the UE, receiving the sixth message from the MN.

In one embodiment, the first message is a SN Change Required message.

In one embodiment, the first message comprises a CG-Config Information Element (IE) that comprises the information about the one or more target candidate cells of the target candidate SN.

In one embodiment, the information about the one or more target candidate cells of the target candidate SN comprises an Absolute Radio Frequency Channel Number (AFCN) and a physical cell identity (ID) for each of the one or more target candidate cells of the target candidate SN.

In one embodiment, the second message is an SN Addition Request.

In one embodiment, the third message is an SN Additional Request acknowledgement.

In one embodiment, the information about the one or more select target candidate cells comprises an AFCN and a physical cell ID for each of the one or more select target candidate cells.

In one embodiment, the fourth message is an SN Change Confirm.

In one embodiment, the fifth message is an SN Modification Required message.

In one embodiment, the measurement configuration information related to the conditional reconfiguration comprises one or more measurement IDs associated to one or more respective execution conditions for the one or more select target candidate cells.

In one embodiment, the fifth message further comprises information related to measurement gaps that enables the S-SN to determine measurement gaps the UE needs to be configured with to perform inter-frequency measurements on frequencies associated to the one or more select target candidate cells.

In one embodiment, the sixth message is a Radio Resource Control (RRC) Reconfiguration message.

Embodiments of a method performed by a S-SN are also disclosed. In one embodiment, a method performed by a S-SN for configuring measurements related to inter-SN conditional reconfiguration comprises sending, to a MN, a first message comprising an indication that the first message is for conditional reconfiguration and information about one or more target candidate cells of a target candidate SN. The method further comprises receiving a second message from the MN comprising information about one or more select target candidate cells from among the one or more target candidate cells of the target candidate SN and sending, based on the information about the one or more select target candidate cells, a third message to the UE, where the measurement configuration information is related to the conditional reconfiguration.

In one embodiment, the first message is a SN Change Required message.

In one embodiment, the first message comprises a CG-Config IE that comprises the information about the one or more target candidate cells of the target candidate SN.

In one embodiment, the information about the one or more target candidate cells of the target candidate SN comprises an AFCN and a physical cell ID for each of the one or more target candidate cells of the target candidate SN.

In one embodiment, the information about the one or more select target candidate cells comprises an AFCN and a physical cell ID for each of the one or more select target candidate cells.

In one embodiment, the second message is an SN Change Confirm.

In one embodiment, the third message is an SN Modification Required message.

In one embodiment, the measurement configuration information related to the conditional reconfiguration comprises one or more measurement IDs associated to one or more respective execution conditions for the one or more select target candidate cells.

In one embodiment, the third message further comprises information related to measurement gaps that enables the S-SN to determine measurement gaps the UE needs to be configured with to perform inter-frequency measurements on frequencies associated to the one or more select target candidate cells.

Corresponding embodiments of a S-SN are also disclosed. In one embodiment, a S-SN for configuring measurements related to inter-SN conditional reconfiguration is adapted to send, to a MN, a first message comprising an indication that the first message is for conditional reconfiguration and information about one or more target candidate cells of a target candidate SN. The S-SN is further adapted to receive a second message from the MN comprising information about one or more select target candidate cells from among the one or more target candidate cells of the target candidate SN and send, based on the information about the one or more select target candidate cells, a third message to the MN comprising measurement configuration information for a UE, where the measurement configuration information is related to the conditional reconfiguration.

In one embodiment, a S-SN for configuring measurements related to inter-SN conditional reconfiguration comprises processing circuitry configured to cause the S-SN to send, to a MN, a first message comprising an indication that the first message is for conditional reconfiguration and information about one or more target candidate cells of a target candidate SN. The processing circuitry is further configured to cause the S-SN to receive a second message from the MN comprising information about one or more select target candidate cells from among the one or more target candidate cells of the target candidate SN and send, based on the information about the one or more select target candidate cells, a third message to the MN comprising measurement configuration information for a UE, where the measurement configuration information is related to the conditional reconfiguration.

Embodiments of a method performed by a MN are also disclosed. In one embodiment, a method performed by a MN for configuring measurements related to inter-SN conditional reconfiguration comprises receiving a first message from a S-SN comprising an indication that the first message is for conditional reconfiguration and information about one or more target candidate cells of a target candidate SN and sending a second message to the target candidate SN, the second message being a request for SN addition and comprising an indication that the second message is for conditional reconfiguration and information about the one or more target candidate cells of the target candidate SN.

In one embodiment, the first message comprises a SCG measurement configuration for conditional reconfiguration. In one embodiment, the method further comprises receiving a third message from the target candidate SN, the third message comprising information about one or more select target candidate cells from among the one or more target candidate cells of the target candidate SN. The method further comprises determining whether there is a need for a second procedure for updating the SCG measurement configuration based on the information comprised in the third message. In one embodiment, the method further comprises, responsive to determining there is not a need for the second procedure for updating the SCG measurement configuration, sending a fourth message to a UE, the fourth message comprising the SCG measurement configuration for conditional reconfiguration. In another embodiment, responsive to determining there is a need for the second procedure for updating the SCG measurement configuration, communicating with the S-SN to perform the second procedure for updating the SCG measurement configuration to thereby obtain an updated SCG measurement configuration and sending a fourth message to a UE, the fourth message comprising the updated SCG measurement configuration for conditional reconfiguration.

In another embodiment, the method further comprises receiving a third message from the target candidate SN comprising information about one or more select target candidate cells from among the one or more target candidate cells of the target candidate SN, sending a fourth message to the S-SN comprising the information about one or more select target candidate cells, receiving a fifth message from the S-SN comprising measurement configuration information related to the conditional reconfiguration, and sending a sixth message to a UE, the sixth message comprising the measurement configuration information related to the conditional reconfiguration.

In one embodiment, the first message is a SN Change Required message.

In one embodiment, the first message comprises a CG-Config IE that comprises the information about the one or more target candidate cells of the target candidate SN.

In one embodiment, the information about the one or more target candidate cells of the target candidate SN comprises an AFCN and a physical cell ID for each of the one or more target candidate cells of the target candidate SN.

In one embodiment, the second message is an SN Addition Request.

In one embodiment, the third message is an SN Additional Request acknowledgement.

In one embodiment, the information about the one or more select target candidate cells comprises an AFCN and a physical cell ID for each of the one or more select target candidate cells.

In one embodiment, the fourth message is an SN Change Confirm.

In one embodiment, the fifth message is an SN Modification Required message.

In one embodiment, the measurement configuration information related to the conditional reconfiguration comprises one or more measurement IDs associated to one or more respective execution conditions for the one or more select target candidate cells.

In one embodiment, the fifth message further comprises information related to measurement gaps that enables the S-SN to determine measurement gaps the UE needs to be configured with to perform inter-frequency measurements on frequencies associated to the one or more select target candidate cells.

In one embodiment, the sixth message is an RRC Reconfiguration message.

Corresponding embodiments of a MN are also disclosed. In one embodiment, a MN for configuring measurements related to inter-SN conditional reconfiguration is adapted to receive a first message from a S-SN comprising an indication that the first message is for conditional reconfiguration and information about one or more target candidate cells of a target candidate SN and send a second message to the target candidate SN, the second message being a request for SN addition and comprising an indication that the second message is for conditional reconfiguration and information about the one or more target candidate cells of the target candidate SN.

In one embodiment, a MN for configuring measurements related to inter-SN conditional reconfiguration comprises processing circuitry configured to cause the MN to receive a first message from a S-SN comprising an indication that the first message is for conditional reconfiguration and information about one or more target candidate cells of a target candidate SN and send a second message to the target candidate SN, the second message being a request for SN addition and comprising an indication that the second message is for conditional reconfiguration and information about the one or more target candidate cells of the target candidate SN.

Embodiments of a method performed by a target candidate SN are also disclosed. In one embodiment, a method performed by a target candidate SN for configuring measurements related to inter-SN conditional reconfiguration comprises receiving a first message from a MN, the first message being a request for SN addition and comprising an indication that the second message is for conditional reconfiguration and information about the one or more target candidate cells of the target candidate SN. The method further comprises sending a second message to the MN comprising information about one or more select target candidate cells from among the one or more target candidate cells of the target candidate SN.

In one embodiment, the information about the one or more target candidate cells of the target candidate SN comprises an AFCN and a physical cell ID for each of the one or more target candidate cells of the target candidate SN.

In one embodiment, the first message is an SN Addition Request.

In one embodiment, the second message is an SN Additional Request acknowledgement.

In one embodiment, the information about the one or more select target candidate cells comprises an AFCN and a physical cell ID for each of the one or more select target candidate cells.

Corresponding embodiment of a target candidate SN are also disclosed. In one embodiment, a target candidate SN for configuring measurements related to inter-SN conditional reconfiguration is adapted to receive a first message from a MN, the first message being a request for SN addition and comprising an indication that the second message is for conditional reconfiguration and information about the one or more target candidate cells of the target candidate SN. The target candidate SN is further adapted to send a second message to the MN comprising information about one or more select target candidate cells from among the one or more target candidate cells of the target candidate SN.

In one embodiment, a target candidate SN for configuring measurements related to inter-SN conditional reconfiguration comprises processing circuitry configured to cause the target candidate SN to receive a first message from a MN, the first message being a request for SN addition and comprising an indication that the second message is for conditional reconfiguration and information about the one or more target candidate cells of the target candidate SN. The processing circuitry is further configured to cause the target candidate SN to send a second message to the MN comprising information about one or more select target candidate cells from among the one or more target candidate cells of the target candidate SN.

### Brief Description of the Drawings

The accompanying drawing figures incorporated in and forming a part of this specification illustrate several aspects of the disclosure, and together with the description serve to explain the principles of the disclosure.
Figure 1 is a flow diagram illustrating Secondary Node (SN) initiated Conditional SN Modification (CPC) without Master Node (MN) involvement where Signaling Radio Bearer (SRB) 3 (SRB3) is used;
Figure 2 is a flow diagram illustrating SN initiated Conditional SN Modification (CPC) without MN involvement, where SRB3 is not used;
Figure 3 illustrates a traditional *CG-Configlnfo* message;
Figure 4 illustrates SN-initiated inter-SN CPC procedure based on an option in which: (a) the Master Node (MN) generates CPC and the source SN sets the execution condition and communicates it to the MN and (b) the MN generates the conditional reconfiguration message including the execution condition(s) provided by the source SN and RRCReconfiguration provided by the candidate Primary Secondary Cell(s) (PSCell(s));
Figure 5 illustrates one example of a cellular communications system in which embodiments of the present disclosure may be implemented;
Figure 6 illustrates an example of the *ConditionalReconfiguration* IE according to embodiments described herein
Figure 7 illustrates an example of the *CondConfigId* IE according to embodiments described herein;
Figure 8 illustrates an example of the *ConditionalReconfiguration* IE according to embodiments described herein;
Figure 9 illustrates an example of the *CondConfigToAddMod* IE according to embodiments described herein;
Figure 10 illustrates an example of a *MeasGapConfig* IE according to embodiments described herein;
Figure 11 is a flow diagram of a first solution, providing an additional procedure for configuring SCG *measConfig* for CPC, according to embodiments of the present disclosure;
Figure 12 is an example of a *CG-Config* message according to embodiments described herein;
Figure 13 illustrates an example of the *CG-Configlnfo* message according to embodiments described herein;
Figure 14 illustrates an example of *CG-Config* message according to embodiments described herein;
Figure 15 illustrates an example of *the RRCReconfiguration* message according to embodiments described herein;
Figure 16 illustrates an example of the *CondReconfigToAddMod* IE according to embodiments described herein;
Figure 17 is a flow diagram of an example of a second solution, providing opportunistic provision of SCG *measConfig* for CPC according to embodiments described herein;
Figure 18 is a flow diagram of another example the second solution, providing opportunistic provision of SCG *measConfig* for CPC according to embodiments described herein;
Figure 19 is a flow diagram of a third solution, for provision of multiple versions of SCG measConfig for CPC according to embodiments described herein
Figure 20 is a flow diagram of a fourth solution, where the UE ignores or releases unnecessary SCG measConfig for CPC according to embodiments described herein;
Figure 21 illustrates an example of the *MeasGapConfig* IE according to embodiments described herein;
Figure 22 illustrates an example of the *CG-Config* message according to embodiments described herein;
Figure 23 illustrates an example of the *MeasResult2NR* IE according to embodiments described herein;
Figure 24 illustrates an example of the *MeasResult2NR* IE according to embodiments described herein;
Figure 25 illustrates an example of the *MeasResultNeighCellListNR* IE according to embodiments described herein;
Figures 26, 27, and 28 are schematic block diagrams of example embodiments of a radio access node, which may be, for example, a S-SN, a MN, or a T-SN;
Figures 29 and 30 are schematic block diagrams of example embodiments of a UE.

### Detailed Description

The embodiments set forth below represent information to enable those skilled in the art to practice the embodiments and illustrate the best mode of practicing the embodiments. Upon reading the following description in light of the accompanying drawing figures, those skilled in the art will understand the concepts of the disclosure and will recognize applications of these concepts not particularly addressed herein. It should be understood that these concepts and applications fall within the scope of the disclosure.

Some of the embodiments contemplated herein will now be described more fully with reference to the accompanying drawings. Other embodiments, however, are contained within the scope of the subject matter disclosed herein, the disclosed subject matter should not be construed as limited to only the embodiments set forth herein; rather, these embodiments are provided by way of example to convey the scope of the subject matter to those skilled in the art.

Generally, all terms used herein are to be interpreted according to their ordinary meaning in the relevant technical field, unless a different meaning is clearly given and/or is implied from the context in which it is used. All references to a/an/the element, apparatus, component, means, step, etc. are to be interpreted openly as referring to at least one instance of the element, apparatus, component, means, step, etc., unless explicitly stated otherwise. The steps of any methods disclosed herein do not have to be performed in the exact order disclosed, unless a step is explicitly described as following or preceding another step and/or where it is implicit that a step must follow or precede another step. Any feature of any of the embodiments disclosed herein may be applied to any other embodiment, wherever appropriate. Likewise, any advantage of any of the embodiments may apply to any other embodiments, and vice versa. Other objectives, features, and advantages of the enclosed embodiments will be apparent from the following description.

**Radio Node:** As used herein, a "radio node" is either a radio access node or a wireless communication device.

**Radio Access Node:** As used herein, a "radio access node" or "radio network node" or "radio access network node" is any node in a Radio Access Network (RAN) of a cellular communications network that operates to wirelessly transmit and/or receive signals. Some examples of a radio access node include, but are not limited to, a base station (e.g., a New Radio (NR) base station (gNB) in a Third Generation Partnership Project (3GPP) Fifth Generation (5G) NR network or an enhanced or evolved Node B (eNB) in a 3GPP Long Term Evolution (LTE) network), a high-power or macro base station, a low-power base station (e.g., a micro base station, a pico base station, a home eNB, or the like), a relay node, a network node that implements part of the functionality of a base station (e.g., a network node that implements a gNB Central Unit (gNB-CU) or a network node that implements a gNB Distributed Unit (gNB-DU)) or a network node that implements part of the functionality of some other type of radio access node.

**Core Network Node:** As used herein, a "core network node" is any type of node in a core network or any node that implements a core network function. Some examples of a core network node include, e.g., a Mobility Management Entity (MME), a Packet Data Network Gateway (P-GW), a Service Capability Exposure Function (SCEF), a Home Subscriber Server (HSS), or the like. Some other examples of a core network node include a node implementing an Access and Mobility Management Function (AMF), a User Plane Function (UPF), a Session Management Function (SMF), an Authentication Server Function (AUSF), a Network Slice Selection Function (NSSF), a Network Exposure Function (NEF), a Network Function (NF) Repository Function (NRF), a Policy Control Function (PCF), a Unified Data Management (UDM), or the like.

**Communication Device:** As used herein, a "communication device" is any type of device that has access to an access network. Some examples of a communication device include, but are not limited to: mobile phone, smart phone, sensor device, meter, vehicle, household appliance, medical appliance, media player, camera, or any type of consumer electronic, for instance, but not limited to, a television, radio, lighting arrangement, tablet computer, laptop, or Personal Computer (PC). The communication device may be a portable, hand-held, computer-comprised, or vehicle-mounted mobile device, enabled to communicate voice and/or data via a wireless or wireline connection.

**Wireless Communication Device:** One type of communication device is a wireless communication device, which may be any type of wireless device that has access to (i.e., is served by) a wireless network (e.g., a cellular network). Some examples of a wireless communication device include, but are not limited to: a User Equipment device (UE) in a 3GPP network, a Machine Type Communication (MTC) device, and an Internet of Things (IoT) device. Such wireless communication devices may be, or may be integrated into, a mobile phone, smart phone, sensor device, meter, vehicle, household appliance, medical appliance, media player, camera, or any type of consumer electronic, for instance, but not limited to, a television, radio, lighting arrangement, tablet computer, laptop, or PC. The wireless communication device may be a portable, hand-held, computer-comprised, or vehicle-mounted mobile device, enabled to communicate voice and/or data via a wireless connection.

**Network Node:** As used herein, a "network node" is any node that is either part of the RAN or the core network of a cellular communications network/system.

**Transmission/Reception Point (TRP):** In some embodiments, a TRP may be either a network node, a radio head, a spatial relation, or a Transmission Configuration Indicator (TCI) state. A TRP may be represented by a spatial relation or a TCI state in some embodiments. In some embodiments, a TRP may be using multiple TCI states. In some embodiments, a TRP may a part of the gNB transmitting and receiving radio signals to/from UE according to physical layer properties and parameters inherent to that element. In some embodiments, in Multiple TRP (multi-TRP) operation, a serving cell can schedule UE from two TRPs, providing better Physical Downlink Shared Channel (PDSCH) coverage, reliability and/or data rates. There are two different operation modes for multi-TRP: single Downlink Control Information (DCI) and multi-DCI. For both modes, control of uplink and downlink operation is done by both physical layer and Medium Access Control (MAC). In single-DCI mode, UE is scheduled by the same DCI for both TRPs and in multi-DCI mode, UE is scheduled by independent DCIs from each TRP.

Note that the description given herein focuses on a 3GPP cellular communications system and, as such, 3GPP terminology or terminology similar to 3GPP terminology is oftentimes used. However, the concepts disclosed herein are not limited to a 3GPP system.

Note that, in the description herein, reference may be made to the term "cell"; however, particularly with respect to 5G NR concepts, beams may be used instead of cells and, as such, it is important to note that the concepts described herein are equally applicable to both cells and beams.

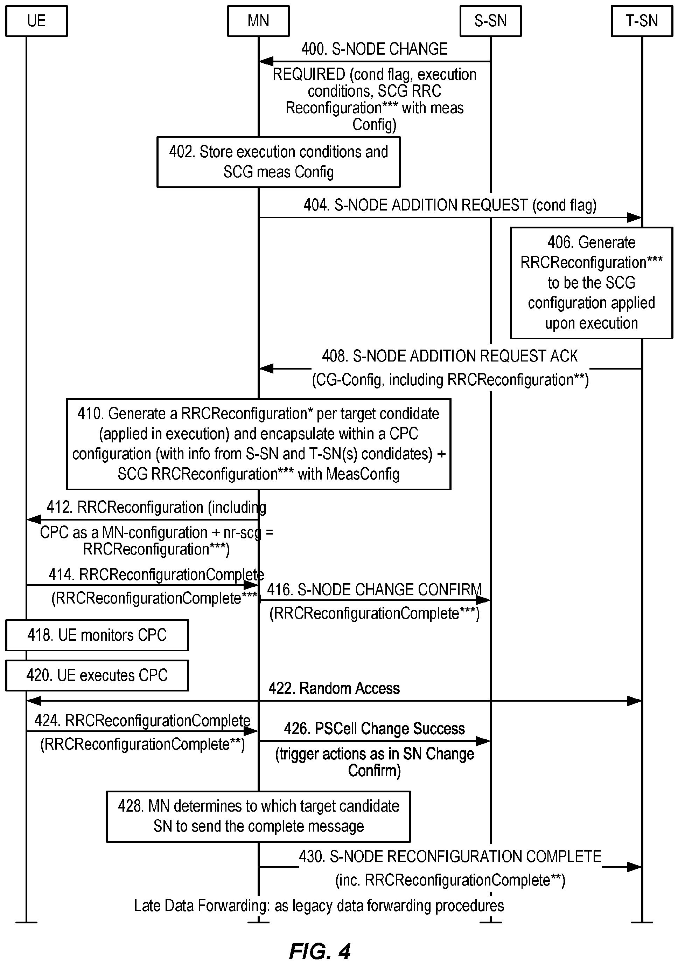

There currently exist certain challenge(s). In a recent paper by Ericsson to RAN2#113e (R2-2101270) and RAN2#114e (R2-2105898), solutions related to how the UE performs Conditional Primary Secondary Cell (PSCell) Change (CPC) related measurements in the case of inter-Secondary Node (SN) CPC was proposed. Figure 4, which is a reproduction of a corresponding figure in R2-2101270, illustrates SN-initiated inter-SN CPC procedure based on an option in which: (a) the Master Node (MN) generates CPC and the source SN sets the execution condition and communicates it to the MN and (b) the MN generates the conditional reconfiguration message including the execution condition(s) provided by the source SN and RRCReconfiguration provided by the candidate PSCell(s). One of the problems R2-2105898 addresses is that, upon receiving an MN-generated CPC configuration (for inter-SN CPC), e.g., in an SN Change Required message, the UE also receives the execution condition (i.e. one or more measId(s) per candidate cell) but it is not clear whether that measId refers to an Master Cell Group (MCG) measurement configuration - MCG MeasConfig (determined by the MN) - or an Secondary Cell Group (SCG) measurement configuration - SCG MeasConfig (determined by the SN). One of the solutions proposed in R2-2105898 was that an indication is provided to the UE to indicate whether a measId is associated to an MCG MeasConfig or to an SCG measConfig.

In addition, the solution described in R2-2105898 comprises the Source SN (S-SN) generating an SCG Reconfiguration (also called SN Reconfiguration, as it is in SN format) containing an SCG Measurement Configuration (SCG MeasConfig) comprising the CPC related measConfig, i.e. the configuration of measurement identifiers and association to measurement object(s) and reporting configuration(s) for conditional reconfiguration (e.g., CPC). It has also been proposed that the S-SN includes that in the SN Change Required message to the MN, with some indication this is conditional, e.g. for CPC; with information about target candidate cells (PSCell candidates), such as measurements, and Target candidate SN(s) (T-SN).

The solution in R2-2105898 is applicable for the following case: the S-SN includes a request for a number (e.g., N) of target cell candidates associated to measId(s) and the SCG MeasConfig for CPC, the MN requests the target candidate SN to prepare the RRCReconfiguration** for CPC for each target cell candidate, and the T-SN prepared the RRCReconfiguration** for all N request candidates.

The solution in R2-2105898 is also applicable for some cases where the target SN does not accept all the N candidates, i.e., it accepts a subset (K target candidates, with K<N) of candidates and prepares a subset of RRCReconfiguration**, per each of the K candidates. One of the cases is if the measId(s) configured in the SCG MeasConfig are set per frequency (i.e., for target candidates in the same frequency, the same measId(s) is used) and, if all the requested frequencies are represented by at least one candidate, the SCG MeasConfig from S-SN in SN Change Required (i.e., in RRCReconfiguration***) is still applicable.

Example 1) For example, let's say that the S-SN indicates the following in the SN Change Required (e.g., in the CG-Config container) to the MN, when requesting an inter-SN CPC to the MN:
- Frequency A
   ∘ PSCell=7 → CPC measId=1;
   ∘ PSCell=9 → CPC measId=1;
- Frequency B
   ∘ PSCell=5 → CPC measId=3;
- RRCReconfiguration***
   ∘ Includes SCG MeasConfig configuring measId=1 and measId=3, i.e. for each MeasId the association to a measurement object (via a measObjectId) and a reporting configuration (via a reportConfigId); and possibly one or more measurement objects and one or more reporting configurations. In this example, there should be a measObjectId for frequency A and a measObjectId for frequency B.
If MN sends an SN addition Request indicating this is for CPC including information on PSCell=7 (frequency A), PSCell=9 (frequency A) and PSCell=5 (frequency B), i.e. requesting the T-SN to configure these cells and receives in response an indication that the T-SN candidate only accepts target candidates PSCell=7 (frequency A) and PSCell=5 (frequency B), the method still works. The reason is that SCG MeasConfig, already at the MN, contains configurations for measId=1 and measId=3, i.e. it does not matter from that perspective that PSCell=9 (frequency A) was not accepted/ configured for CPC by the T-SN candidate, since measId(s) for CPC were configured per frequency and for all requested frequencies (e.g., A and B) the T-SN candidate accepted at least one candidate.

A possible limitation of the solution in R2-2105898 may exist in scenarios where at least one MeasID of the execution condition for CPC is configured by the S-SN for a frequency whose target candidate PSCell has not been accepted by the target candidate SN (in SN Addition Request with conditional indication) and/or at least one MeasID is configured by the S-SN for a PSCell that has not been accepted by the target candidate SN (in SN Addition Request with conditional indication). In that case, the UE would receive an SCG measConfig including the CPC related measConfig that contains a configured measId that may not be associated to a target candidate PSCell, i.e. the measurement would not be necessary. That could lead to unnecessary measurements being performed, which leads to unnecessary power consumption, and/or at least the UE having a configuration that is not used for anything.

Example 2) For example, let's say again that the S-SN indicates the following in the SN Change Required (e.g., in the CG-Config container) to the MN, when request an inter-SN CPC to the MN:
- Frequency A
   ∘ PSCell=7 → CPC measId=1;
   ∘ PSCell=9 → CPC measId=1;
- Frequency B
   ∘ PSCell=5 → CPC measId=3;
- RRCReconfiguration***
   ∘ Includes SCG MeasConfig configuring measId=1 and measId=3, i.e. for each MeasId the association to a measurement object (via a measObjectId) and a reporting configuration (via a reportConfigId); and possibly one or more measurement objects and one or more reporting configurations. In this example, there should be a measObjectId for frequency A and a measObjectId for frequency B.
However, if MN sends an SN addition Request indicating this is for CPC including information on PSCell=7 (frequency A), PSCell=9 (frequency A) and PSCell=5 (frequency B), i.e. requesting the T-SN to configure these cells and receives in response an indication that the T-SN candidate only accepts target candidates PSCell=7 (frequency A) and PSCell=9 (frequency A), the SCG MeasConfig in RRCReconfiguration*** would contain the configuration for MeasId=3 (in frequency B), which could lead the UE to perform unnecessary measurement on frequency B.

Certain aspects of the present disclosure and their embodiments may provide solutions to the aforementioned or other challenges. Systems and methods for inter-SN conditional cell change and measurement configuration are provided. Embodiments provide for inter-SN CPC and SCG MeasConfig. There may be different solutions to address the problems described above, organized in a set of embodiments. Each solution is organized in steps, wherein steps of one solution may be combined with steps of another solution. These solutions include:
- **Solution 1: Additional procedure for configuring SCG measConfig for CPC:** In this set of embodiments, the S-SN provides the target candidate cells and/or frequencies to the MN (e.g., in an SN Change Required message), so the MN sends an SN Addition Request for CPC to the T-SN (also including the target candidate cells and/or frequencies). The T-SN, upon reception of the message, determines the target candidate cells and/or frequencies and indicates the decision in a response to the MN (which may be a subset of the cells and/or frequencies the S-SN initially requested/indicated). Then, the MN sends a message to the S-SN including the information about the T-SN's decision, e.g. including the candidate cells/ frequencies that the T-SN has selected (or any indication of that). In response to that message, the S-SN triggers the second procedure and sends a message to the MN including the determined SCG measConfig for CPC. That may also include the execution conditions (i.e., the measId(s), possibly transparent) per selected target candidate cell / frequency. Both the execution conditions/ candidate cell/frequency and the SCG measConfig for CPC may be included in the RRC container, e.g. CG-Config in the SN Modification Required.
   ∘ Mainly network embodiments.
- **Solution 2: Opportunistic provision of SCG measConfig for CPC:** In this set of embodiments, the S-SN provides the SCG measConfig for CPC in the first message to the MN, e.g. SN Change Required. This is said to be done opportunistically, as a second procedure may be avoided, depending on the decision of the T-SN concerning which frequencies and/or cell candidates will be accepted. That SCG measConfig for CPC remains the one that goes to the UE if the T-SN, upon having received the SN Addition Request for CPC, accepts all frequencies and/or cell candidates requested by the S-SN (via the MN). Else, in case the T-SN does not accept all frequencies and/or cell candidates from the S-SN, the MN needs to indicate that to the S-SN so that the S-SN provides an update to the SCG measConfig for CPC, this time taking into account the accepted frequencies and/or cell candidates by the T-SN.
   ∘ Mainly network embodiments.
- **Solution 3: Provision of multiple versions of SCG measConfig for CPC:** In this set of embodiments, the S-SN provides multiple versions of the SCG measConfig for CPC in the first message to the MN, e.g. SN Change Required. The version are associated to the target candidate cells / frequencies the S-SN includes the message to the MN and, based on the further information on the selected cell candidates and/or frequencies from the T-SN candidate the MN selects which version of the SCG measConfig for CPC it uses to configure the UE.
   ∘ Mainly network embodiments.
- **Solution 4: UE ignores or releases unnecessary SCG measConfig for CPC:** In this set of embodiments, the S-SN provides the SCG measConfig for CPC and/or execution conditions in the first message to the MN, e.g. SN Change Required. The S-SN assumes that all requested cells and/or frequencies request in the SN Change Required, that will be requested by the MN to the T-SN candidate in the SN Addition Request for CPC, may be accepted. That SCG measConfig for CPC remains the one that goes to the UE and, depending which frequencies and/or cells candidates the T-SN candidates accept, that SCG measConfig for CPC may contain measId(s) configured that are not to be associated to any target candidate PSCell configuration by the MN. And, if that is the case, the UE is not required to perform these measurements. In other words, the UE is not required to perform measurements whose configured measId(s) in SCG MeasConfig for CPC have associated reporting configuration for a CPC trigger (or in more general a conditional reconfiguration trigger, e.g. reportType set to condTriggerConfig-r16 of Information Element (IE) CondTriggerConfig-r16), if the measId(s) are not referred as execution conditions. This solution comprises the MN selecting the execution conditions associated only with the candidate cells / frequencies selected by the T-SN candidates, based on the information from the T-SN about selected cells and frequency candidates, without the need to modify the SCG MeasConfig for CPC and/or without the need for a second procedure to obtain an updated version of SCG MeasConfig for CPC.
   ∘ Mainly UE embodiments.

There are, proposed herein, various embodiments which address one or more of the issues disclosed herein. In some embodiments, a method is performed by a UE for configuring a CPC, the method comprising one or more of: receiving a RRC configuration message that includes a CPC configuration; and applying the CPC configuration.

In some embodiments, a UE is configured to communicate with a network node, the UE comprising processing circuitry configured to perform the method of any of the above embodiments.

In some embodiments, a method is performed by a radio access node for configuring a CPC the method comprising one or more of: sending a message to a MN indicating a SN change is required; receiving a SN change confirm message including information regarding a target candidate SN; and triggering a second procedure for updating a SCG measurement configuration.

In some embodiments, a method is performed by a radio access node for configuring a CPC, the method comprising one or more of: receiving a message indicating a SN change is required; sending a SN addition request to a target candidate SN; receiving a SN addition response from the target candidate SN; and determining if there is a need for a second procedure for updating a SCG measurement configuration.

In some embodiments, a method is performed by a radio access node for configuring a CPC, the method comprising one or more of: receiving a message indicating a SN change is required; sending a SN addition request to a target candidate SN; receiving a SN addition response from the target candidate SN; and determining which version of a SCG measurement configuration is selected.

In some embodiments, a method is performed by a radio access node for configuring a Conditional Primary Secondary Cell, PSCell, Change, CPC, the method comprising one or more of: receiving a message indicating a SN change is required; sending a SN addition request to a target candidate SN; receiving a SN addition response from the target candidate SN; and determining execution conditions to be provided to a UE.

In some embodiments, a radio access node is configured to communicate with a UE, the network node comprising processing circuitry configured to perform the method of any of the above embodiments.

Certain embodiments may provide one or more of the following technical advantage(s). The different solutions have different advantages which can be summarized as follows:
- Solution 1: Additional procedure for configuring SCG measConfig for CPC
   ∘ This solution is advantageous from an implementation point of view with easy implementation and low risk for configuration mismatch between the UE and the network. And, in the case of measurement gaps coordination, it enables the UE, the MN and the S-SN to determine the measurement gap the UE should configure with based on the frequencies the UE is supposed to measured, not only as requested by the S-SN for CPC but also agreed/ accepted by the target candidate SN.
- Solution 2: Opportunistic provision of SCG measConfig for CPC
   ∘ This solution has the possibility to save one RTT, i.e. one network procedure between the MN and S-SN, and it has straight-forward implementation. At the same time, if needed, an additional procedure can be triggered. And, in the case of measurement gaps coordination, it enables the UE, the MN and the S-SN to determine the measurement gap the UE should configure with based on the frequencies the UE is supposed to measured, not only as requested by the S-SN for CPC but also agreed/ accepted by the target candidate SN.
- Solution 3: Provision of multiple versions of SCG measConfig for CPC
   ∘ Saves one RTT, i.e. one network procedure between the MN and S-SN. For the issue related to the measurement gaps coordination, multiple versions of measurement gaps are also part of the solution, depending on the selected frequencies.
- Solution 4: UE ignores or releases unnecessary SCG measConfig for CPC
   ∘ Saves one RTT, i.e. one network procedure between the MN and S-SN, no need for complicated inter-node signaling.
The different advantages for the solutions are further described below.

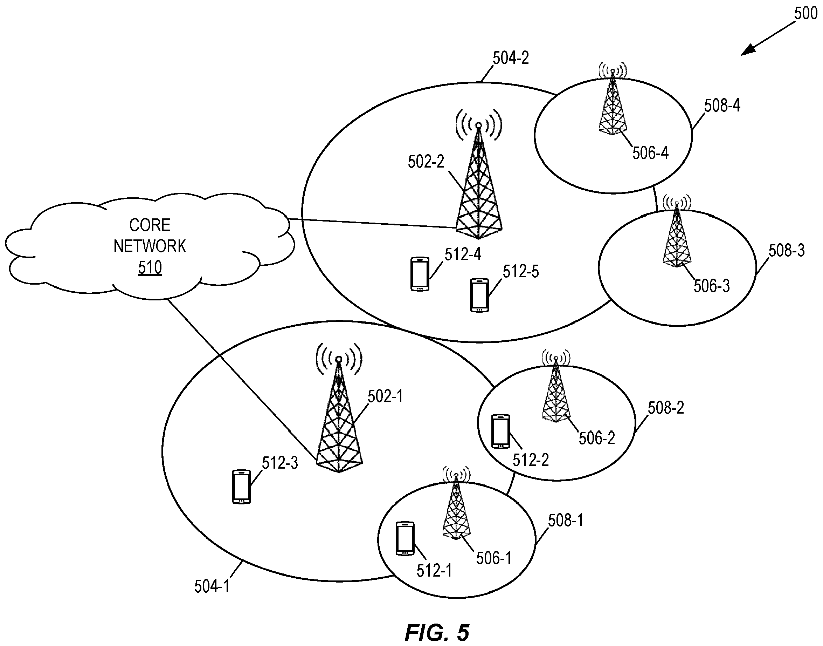

Figure 5 illustrates one example of a cellular communications system 500 in which embodiments of the present disclosure may be implemented. In the embodiments described herein, the cellular communications system 500 is a 5G system (5GS) including a Next Generation RAN (NG-RAN) and a 5G Core (5GC) or an Evolved Packet System (EPS) including an Evolved Universal Terrestrial RAN (E-UTRAN) and an Evolved Packet Core (EPC). In this example, the RAN includes base stations 502-1 and 502-2, which in the 5GS include NR base stations (gNBs) and optionally next generation eNBs (ng-eNBs) (e.g., LTE RAN nodes connected to the 5GC) and in the EPS include eNBs, controlling corresponding (macro) cells 504-1 and 504-2. The base stations 502-1 and 502-2 are generally referred to herein collectively as base stations 502 and individually as base station 502. Likewise, the (macro) cells 504-1 and 504-2 are generally referred to herein collectively as (macro) cells 504 and individually as (macro) cell 504. The RAN may also include a number of low power nodes 506-1 through 506-4 controlling corresponding small cells 508-1 through 508-4. The low power nodes 506-1 through 506-4 can be small base stations (such as pico or femto base stations) or Remote Radio Heads (RRHs), or the like. Notably, while not illustrated, one or more of the small cells 508-1 through 508-4 may alternatively be provided by the base stations 502. The low power nodes 506-1 through 506-4 are generally referred to herein collectively as low power nodes 506 and individually as low power node 506. Likewise, the small cells 508-1 through 508-4 are generally referred to herein collectively as small cells 508 and individually as small cell 508. The cellular communications system 500 also includes a core network 510, which in the 5G System (5GS) is referred to as the 5GC. The base stations 502 (and optionally the low power nodes 506) are connected to the core network 510.

The base stations 502 and the low power nodes 506 provide service to wireless communication devices 512-1 through 512-5 in the corresponding cells 504 and 508. The wireless communication devices 512-1 through 512-5 are generally referred to herein collectively as wireless communication devices 512 and individually as wireless communication device 512. In the following description, the wireless communication devices 512 are oftentimes UEs and as such sometimes referred to herein as UEs 512, but the present disclosure is not limited thereto.

The present disclosure refers to a first network node operating as a MN, e.g. having a MCG configured to the UE and/or an MN-terminated bearer; that MN can be a gNB, or a Central Unit gNB (CU-gNB) or an eNB, or a Central Unit eNB (CU-gNB), or any network node and/or network function. The present disclosure also refers to a second network node operating as a SN, or S-SN e.g. having a SCG connected to the UE; that SN can be a gNB, or a CU-gNB) or an eNB, or a CU-gNB, or any network node and/or network function. Notice that MN, S-SN, and T-SN may be from the same or different Radio Access Technologies and possibly be associated to different Core Network nodes.

The present disclosure refers to a target SN (T-SN) candidate, target candidate SN, or SN candidate, or an SN, or T-SN, as the network node (e.g. gNB) that is prepared during the CPC configuration procedure and that can create an RRC Reconfiguration message with an SCG configuration (e.g. RRCReconfiguration**) to be provided to the UE and stored, with an execution condition, wherein the UE only applies the message upon the fulfillment of the execution condition. That target candidate SN, denoted most of the time in the document as T-SN, is associated to one or multiple PSCell candidate cell(s) that the UE can be configured with. The UE then can execute the condition and accesses one of these candidate cells, associated to a candidate SN that becomes the SN or simply the SN after execution (i.e., upon fulfillment of the execution condition).

The present disclosure refers most of the time to one T-SN. However, the methods include the possibility that the S-SN requests to the MN for CPC target candidate cells / frequencies from one or more T-SN. Consequently, the MN may send SN Addition Requests to one or more T-SN. Hence, any operation the MN needs to perform based on input from the T-SN, may need to wait the response (e.g., SN Addition Request Ack) from all requested T-SN candidates.

The present disclosure refers to a CPC configuration and procedures (like CPC execution), most of the time to refer to the procedure from the UE perspective. Other terms may be considered as synonyms such as conditional reconfiguration, or Conditional Configuration (since the message that is stored and applied upon fulfillment of a condition is an RRCReconfiguration or RRCConnectionReconfiguration). Terminology wise, one could also interpret conditional handover (CHO) in a broader sense, also covering CPA (Conditional PSCell Change) procedures. The present disclosure refers to a Conditional SN Change most of the time to refer to the procedure from the UE perspective, to refer to procedures between network nodes wherein a node requests a target candidate SN (which may be the same as the Source SN or a neighbor SN) to configure a conditional PSCell Change (CPC) for at least one of its associated cells (cell associated to the target candidate SN).

The present disclosure refers to CPAC as a way to refer to either a Conditional PSCell Addition (CPA) or a Conditional PSCell Change (CPC).

The configuration of CPC refers to a conditional configuration or conditional reconfiguration. The principle for the configuration is the same with configuring triggering/execution condition(s) and a reconfiguration message to be applied when the triggering condition(s) are fulfilled. When the present disclosure refers to a CPC configuration it may refer to any of the Information Elements (IEs) indicated below (as defined in TS 38.331) or field associated to the IEs:

### - ConditionalReconfiguration

The IE *ConditionalReconfiguration* is used to add, modify, and release the configuration of conditional configuration.

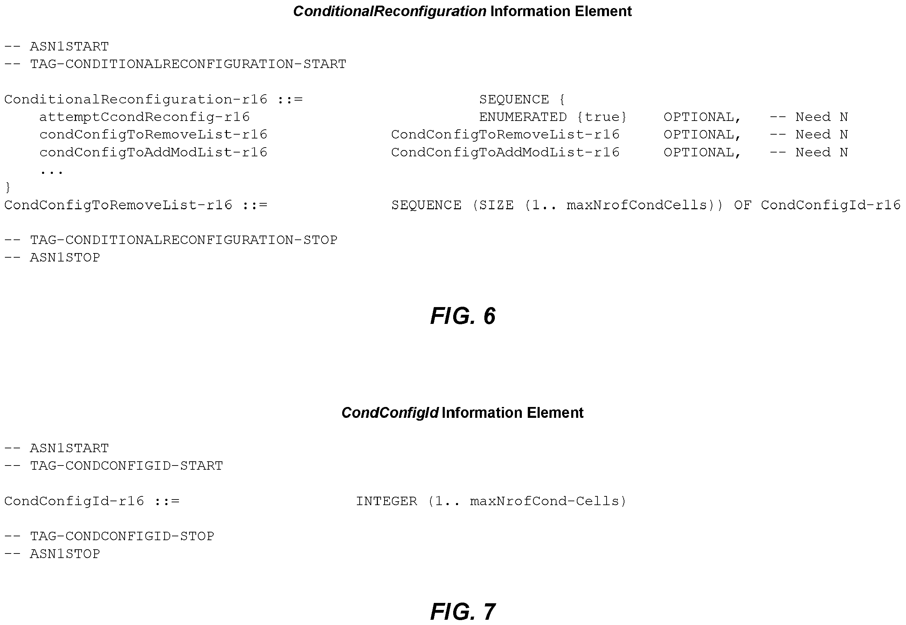

Figure 6 illustrates an example of the *ConditionalReconfiguration* IE according to embodiments described herein. Fields descriptions are as follows:

| ***ConditionalReconfiguration* field descriptions** |
|---|
| ***condConfigToAddModList*** |
| List of the configuration of candidate SpCells to be added or modified for CHO or CPC. |

| ***condConfigToRemoveList*** |
|---|
| List of the configuration of candidate SpCells to be removed. When the network removes the stored conditional configuration for a candidate cell, the network releases the measIDs associated to the *condExecutionCond* if it is not used by the *condExecutionCond* of other candidate cells. |

### - CondConfigld

The IE *CondConfId* is used to identify a CHO or CPC configuration.

Figure 7 illustrates an example of the *CondConfigId*IE according to embodiments described herein.

### - CondConfigToAddModList

The IE *CHO-ConfigToAddModList* concerns a list of conditional configurations to add or modify, with for each entry the *cho-ConfigId* and the associated *condExecutionCond* and *condRRCReconfig.*

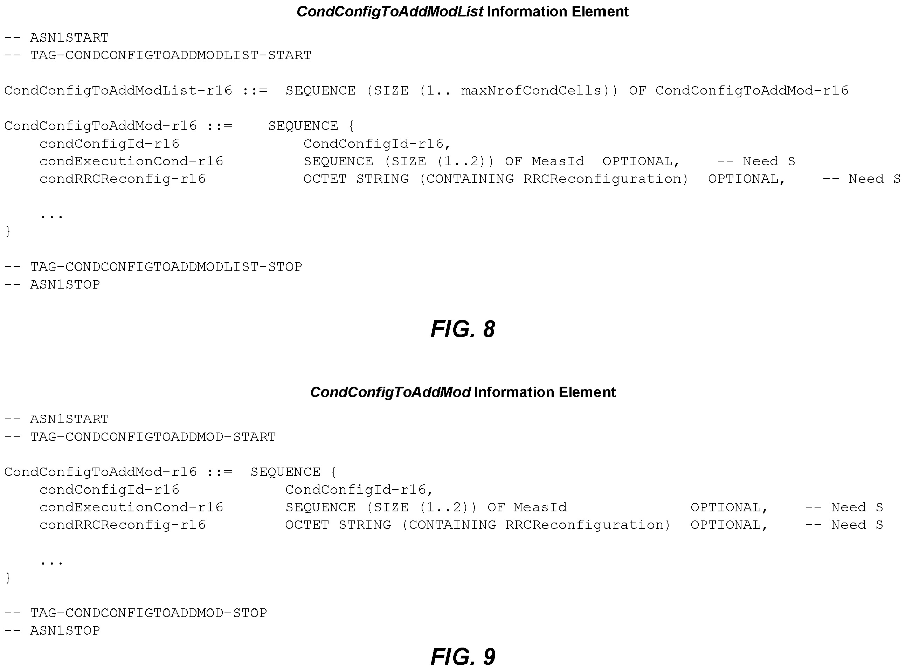

Figure 8 illustrates an example of the *ConditionalReconfiguration* IE according to embodiments described herein. Field descriptions are as follows:

| ***CondConfigToAddMod* field descriptions** |
|---|
| ***condExecutionCond*** |
| The execution condition that needs to be fulfilled in order to trigger the execution of a conditional configuration. The field is mandatory present when a *condConFigId* is being added. Otherwise, when the *condRRCReconfig* associated to a *condConFigId* is being modified it is optionally present and the UE uses the stored value if the field is absent. |

| ***condRRCReconfig*** |
|---|
| The *RRCReconfiguration* message to be applied when the condition(s) are fulfilled. The field is mandatory present when a *condConfigId* is being added. Otherwise, when the *condExecutionCond* associated to a *condConFgId* is being modified it is optionally present and the UE uses the stored value if the field is absent. |

In the different embodiments of the solutions disclosed herein, these IEs are used differently, and, in the case of inter-SN CPC, it is assumed they are generated by the MN. That does not preclude parts of the IE being based on input provided by the S-SN (e.g., execution conditions and SCG MeasConfig for CPC, configuring the execution conditions measId(s)), or the T-SN candidate (e.g., the target candidate configurations, denoted RRCReconfiguration** per PSCell candidate). That comprises the MN generating the IE CondReconfigToAddMod for each target candidate cell.

In the different embodiments of the solutions disclosed herein, it is said the CPC is in MN format when the CPC configuration is not configured as an MR-DC configuration in mrdc-SecondaryCellGroup (as defined in TS 38.331). In other words, the UE receives an *RRCReconfiguration* from the MN that may contain the mrdc-SecondaryCellGroup (e.g., in case the UE is also configured with an SCG MeasConfig for inter-SN CPC) but the CPC is not within that container. That means the IEs listed above (e.g., the IE Conditional Reconfiguration) are not included in mrdc-SecondaryCellGroup.

In the present disclosure, the terms **SCG MeasConfig for CPC,** SCG MeasConfig, CPC related measurement configuration, are used interchangeably. It refers to the fact that the MeasConfig IE including the configuration of the MeasID(s) that are referred by the CPC execution conditions (i.e., in condExecutionCond in the IE CondConfigToAddMod).

Figure 9 illustrates an example of the *CondConfigToAddModIE* according to embodiments described herein.

The SCG MeasConfig for CPC comprises at least one of the following:
- Measurement identities (MeasId(s)) used as an execution condition for CPC, i.e. referred at cond Execution Cond;
- Measurement Objects associated to the abovementioned MeasId(s);
- Reporting configurations associated to the abovementioned MeasId(s);
- MeasID(s) with an the associated reportConfig having a reportType set to condTriggerConfig;
- MeasObject associated to an the associated reportConfig having a reportType set to condTriggerConfig;
- Reporting configuration whose reportConfig has a reportType set to condTriggerConfig;
- Measurement gap configuration for frequencies the UE measures for CPC, i.e. for candidate frequencies / frequencies of target candidate cells.

Embodiments of the solutions described herein may comprise that the SCG MeasConfig for CPC also includes measurement gap configurations for the UE, determined by a measurement gap coordination between the MN and the S-SN (e.g., determined by the S-SN that also determines the frequencies to be measured for CPC and the conditions). That comprises at least one of the parameters in the IE below.

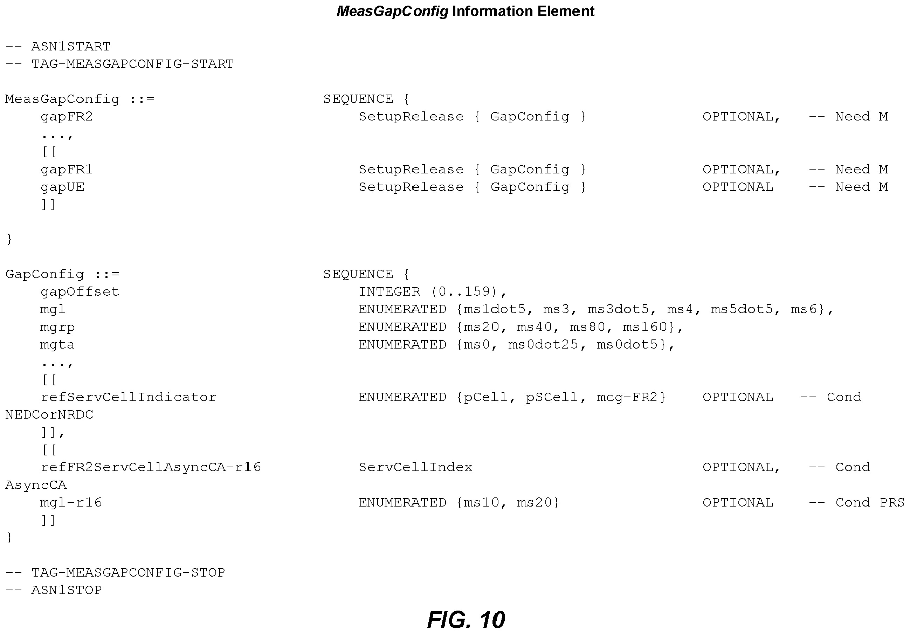

Figure 10 illustrates an example of a *MeasGapConfig* IE according to embodiments described herein. Field descriptions are as follows:

| ***MeasGapConfig* field descriptions** |
|---|
| ***gapFR1*** |
| Indicates measurement gap configuration that applies to FR1 only. In (NG)EN-DC, *gapFR1* cannot be set up by NR RRC (i.e. only LTE RRC can configure FR1 measurement gap). In NE-DC, *gapFR1* can only be set up by NR RRC (i.e. LTE RRC cannot configure FR1 gap). In NR-DC, *gapFR1* can only be set up in the *measConfig* associated with MCG. *gapFR1* can not be configured together with *gapUE.* The applicability of the FR1 measurement gap is according to Table 9.1.2-2 and Table 9.1.2-3 in TS 38.133 [14]. |

| ***gapFR2*** |
|---|
| Indicates measurement gap configuration applies to FR2 only. In (NG)EN-DC or NE-DC, *gapFR2* can only be set up by NR RRC (i.e. LTE RRC cannot configure FR2 gap). In NR-DC, *gapFR2* can only be set up in the *measConfig* associated with MCG. *gapFR2* cannot be configured together with *gapUE.* The applicability of the FR2 measurement gap is according to Table 9.1.2-2 and Table 9.1.2-3 in TS 38.133 [14]. |

| ***gapUE*** |
|---|
| Indicates measurement gap configuration that applies to all frequencies (FR1 and FR2). In (NG)EN-DC, *gapUE* cannot be set up by NR RRC (i.e. only LTE RRC can configure per UE measurement gap). In NE-DC, *gapUE* can only be set up by NR RRC (i.e. LTE RRC cannot configure per UE gap). In NR-DC, *gapUE* can only be set up in the *measConfig* associated with MCG. If *gapUE* is configured, then neither *gapFR1* nor *gapFR2* can be configured. The applicability of the per UE measurement gap is according to Table 9.1.2-2 and Table 9.1.2-3 in TS 38.133 [14]. |

| ***gapOffset*** |
|---|
| Value *gapOffset* is the gap offset of the gap pattern with MGRP indicated in the field *mgrp.* The value range is from 0 to *mgrp-*1*.* |

| ***mg*/** |
|---|
| Value *mgl* is the measurement gap length in ms of the measurement gap. The measurement gap length is according to in Table 9.1.2-1 in TS 38.133 [14]. Value *ms1dot5* corresponds to 1.5 ms, *ms3* corresponds to 3 ms and so on. If *mgl-r16* is present, UE shall ignore the *mgl* (without suffix). |

| ***mgrp*** |
|---|
| Value *mgrp* is measurement gap repetition period in (ms) of the measurement gap. The measurement gap repetition period is according to Table 9.1.2-1 in TS 38.133 [14]. |

| ***mgta*** |
|---|
| Value *mgta* is the measurement gap timing advance in ms. The applicability of the measurement gap timing advance is according to clause 9.1.2 of TS 38.133 [14]. Value msOcorresponds to 0 ms, *ms0dot25* corresponds to 0.25 ms and *ms0dot5* corresponds to 0.5 ms. For FR2, the network only configures 0 ms and 0.25 ms. |

| ***refFR2ServCellIAsyncCA*** |
|---|
| Indicates the FR2 serving cell identifier whose SFN and subframe is used for FR2 gap calculation for this gap pattern with asynchronous CA involving FR2 carrier(s). |

| ***refServCellIndicator*** |
|---|
| Indicates the serving cell whose SFN and subframe are used for gap calculation for this gap pattern. Value pCell corresponds to the PCell, pSCell corresponds to the PSCell, and mcq-FR2 corresponds to a serving cell on FR2 frequency in MCG. |

### Solution 1: Additional Procedure for Configuring SCG measConfig for CPC

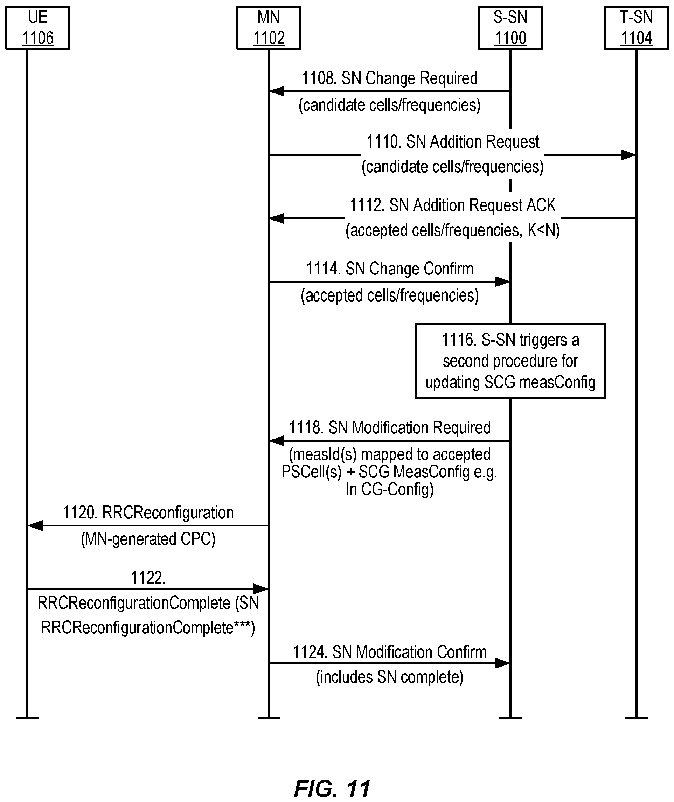

Figure 11 is a flow diagram of a first solution, providing an additional procedure for configuring SCG *measConfig* for CPC. This procedure involves a S-SN 1100, a MN 1102, a T-SN 1104, and a UE 1106.

**Step 1108:** In one set of embodiments, the S-SN 1100 transmits a message to the MN 1102 (e.g., SN Change Required) including an indication this is for a Conditional Reconfiguration (e.g., CPC) and including information of target candidate cells of at least one target candidate SN (e.g., N target candidate PSCell, including measurement results for at least one PSCell candidate), possibly in different frequency (e.g., having different SSB frequency; ARFCN for the SSB).

This message can be defined as follows:

### S-NODE CHANGE REQUIRED

This message is sent by the S-NG-RAN node to the M-NG-RAN node to trigger the change of the S-NG-RAN node.
Direction: S-NG-RAN node -> M-NG-RAN node.

| **IE/Group Name** | **Presence** | **Range** | **IE type and reference** | **Semantics description** | **Criticality** | **Assigned Criticality** |
|---|---|---|---|---|---|---|
| [...] | [...] | | [...] | [...] | [...] | [...] |
| S-NG-RAN node to M-NG-RAN node Container | M | | OCTET STRING | Includes the CG-*Config* message as defined in subclause 11.2.2 of TS 38.331 [10]. | YES | reject |

**Step 1110:** Upon reception of the message, the MN 1102 determines this is for CPC (e.g. based on some indication in the SN Change Required, like a cause value, the configuration of the execution conditions, etc.), and the MN 1102 sends an SN Addition Request to the T-SN 1104 (i.e., to the target candidate SN(s)) indicated in the message (e.g. Target S-NG-RAN node ID(s) of type Global NG-RAN Node ID), including an indication this is for a conditional procedure (e.g. CPC, or a procedure to be executed only upon fulfillment of an execution condition) and including the information of the candidate PSCells/frequencies from the S-SN e.g. including the CG-Config inter-node RRC container (that include measurement results).

The T-SN 1104 receives the SN Addition Request for CPC and selects a set of candidate cells out of the candidate cells provided in the SN Addition Request (e.g., within CG-Config, as described above).

**Step 1112:** After the selection, the T-SN candidate (i.e., the T-SN 1104) sends a message to the MN 1102 (e.g., SN Addition Request Ack) including the information of the selected candidate cells to the MN 1102, including for each selected candidate an RRC Reconfiguration to be applied upon the fulfillment of the execution condition, denoted RRCReconfiguration** (this is the SCG configuration to be provided to the UE 1106 as part of the MN-generated CPC configuration).

In one option, the SN Addition Request Ack includes further information on the selected cell candidates that can be interpreted by the MN 1102, as the MN 1102 needs to take further actions based on the selection from the T-SN 1104. That information can be, for example, a list of physical cell identity + frequency information. There are different possible ways to encode this information in the SN Addition Request Ack message, such as:
- The SN Addition Request Ack message defines a single CG-Config container, even if it has selected multiple target candidate cells, but within the container there are multiple RRC Reconfiguration messages (denoted RRCReconfiguration(s)**), to be applied by the UE upon fulfillment of the execution condition, at least one message per target candidate cell that has been selected. One example of how that can be encoded is shown below:

### S-NODE ADDITION REQUEST ACKNOWLEDGE

This message is sent by the S-NG-RAN node to confirm the M-NG-RAN node about the S-NG-RAN node addition preparation.
Direction: S-NG-RAN node -> M-NG-RAN node.

| **IE/Group Name** | **Presence** | **Range** | **IE type and reference** | **Semantics description** | **Criticality** | **Assigned Criticality** |
|---|---|---|---|---|---|---|
| Message Type | M | | 9.2.3.1 | | YES | reject |
| M-NG-RAN node UE XnAP ID | M | | NG-RAN node UE XnAP ID 9.2.3.16 | Allocated at the M-NG-RAN node | YES | reject |
| S-NG-RAN node UE XnAP ID | M | | NG-RAN node UE XnAP ID 9.2.3.16 | Allocated at the S-NG-RAN node | YES | reject |
| [...] | [...] | [...] | [...] | [...] | [...] | [...] |
| S-NG-RAN node to M-NG-RAN node Container | M | | OCTET STRING | Includes the CG-*Config* message as defined in subclause 11.2.2 of TS 38.331 [10]. | YES | reject |
| [...] | [...] | [...] | [...] | [...] | [...] | [...] |

### CG-Config

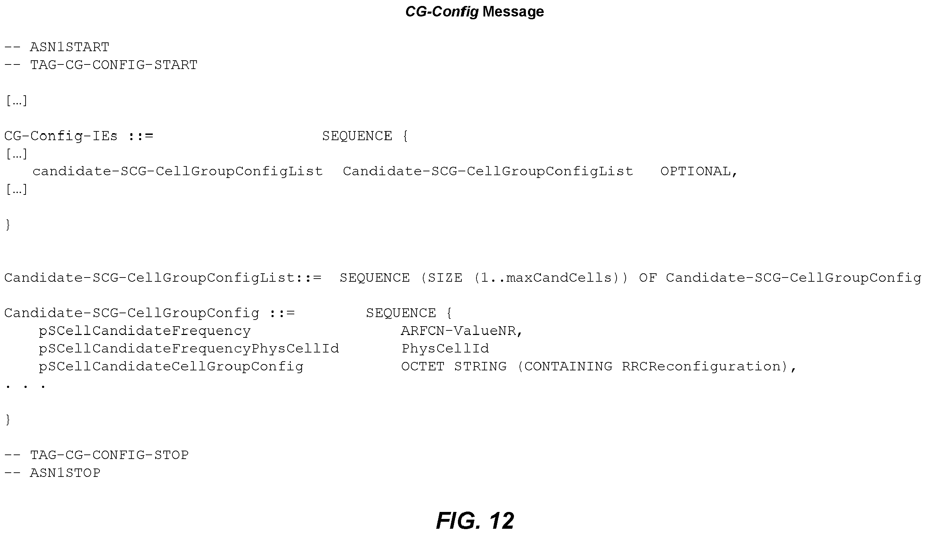

Figure 12 is an example of a *CG-Config* message according to embodiments described herein.
- The SN Addition Request Ack message defines a list of candidate cells and for each one there can be a CG-Config container that contains the RRC Reconfiguration (RRCReconfiguration**) to be applied by the UE 1106 upon fulfillment of the execution condition. In one sub-option, the cell information (e.g., PCI + frequency) is part of the XnAP message. Notice that this option can be attractive as the message from the MN 1102 to the S-SN 1100, e.g. S-NODE CHANGE CONFIRM may not have an RRC inter-node message/container in it.. n other words, one may simply add a list in Xn AP format so that it will also make sense if the MN 1102 receives from the T-SN 1104 also a list in XnAP format. An example is shown below:

### S-NODE ADDITION REQUEST ACKNOWLEDGE

This message is sent by the S-NG-RAN node to confirm the M-NG-RAN node about the S-NG-RAN node addition preparation.
Direction: S-NG-RAN node → M-NG-RAN node.

| **IE/Group Name** | **Presence** | **Range** | **IE type and reference** | **Semantics description** | **Criticality** | **Assigned Criticality** |
|---|---|---|---|---|---|---|
| Message Type | M | | 9.2.3.1 | | YES | reject |
| M-NG-RAN node UE XnAP ID | M | | NG-RAN node UE XnAP ID 9.2.3.16 | Allocated at the M-NG-RAN node | YES | reject |
| S-NG-RAN node UE XnAP ID | M | | NG-RAN node UE XnAP ID 9.2.3.16 | Allocated at the S-NG-RAN node | YES | reject |
| [...] | [...] | [...] | [...] | [...] | [...] | [...] |
| **List of candidate cells** | O | | | | YES | ignore |
| > selected cell info | | | | | | |
| >> Physical cell identity | | | | | | |
| >> frequency information | | | | | | |
| >> S-NG-RAN node to M-NG-RAN | M | | OCTET STRING | Includes the CG-*Config* message as | YES | reject |
| node Container | | | | defined in subclause 11.2.2 of TS 38.331 [10]. | | |
| [...] | [...] | [...] | [...] | [...] | [...] | [...] |

Upon reception, the MN 1102, in one option, does not need to determine whether the target candidate cells indicated by the S-SN 1100 and/or the target candidate frequencies have been selected by the T-SN 1104 candidate.

**Step 1114:** Upon reception of the message from the T-SN 1104 candidate (e.g., the SN Addition Request Ack as in Step 1112), the MN 1102 sends to the S-SN 1100 a message including the information from the T-SN 1104 concerning the selected target candidates, as indicated by the T-SN 1104. The message from the MN 1102 to the S-SN 1100 may be, for example, an SN Change Confirm. The information on the selected target candidate cells may be contained in an inter-node RRC message/ RRC container (e.g., CG-Config container) as received from the T-SN 1104 or included as an XnAP information. The S-SN 1100 does not require to receive the RRCReconfiguration** prepared by the T-SN 1104 per target candidate cell, but only which cells and/or frequencies have been selected to enable the S-SN 1100 to generate the CPC related measurement configuration.

**Step 116:** The S-SN 1100, upon receiving from the MN 1102 the information about the target cell candidates selected by the T-SN 1104 (via the MN 1102, e.g. in the SN Change Confirm), determines which candidate cells have been selected and generates the CPC related measurement configuration to be provided to the UE 1106, and associated to the execution condition(s) for a given frequency and/or target cell candidate. The CPC related measurement configuration can be an SCG MeasConfig encoded in a container and denoted an RRCReconfiguration***. That includes the configuration of the measId(s) associated to the execution condition(s) only for the target candidate cells selected by the T-SN 1104, as indicated by the MN 1102.

That message from the MN 1102 to the S-SN 1100 may also include information related to measurement gaps, i.e., information enabling the S-SN 1100 to determine the measurement gaps the UE 1106 needs to be configured with to perform inter-frequency measurements on the frequencies associated to the target candidate cells, i.e., as selected by the T-SN candidate(s). That may comprise, for example, the current measurement gaps the UE 1106 is configured with, e.g., by the MN 1102 and/or as an MCG measConfig, and/or current frequencies the MN 1102 has configured the UE 1106 to measure. The information may be any of the fields included in the inter-node RRC IE CG-ConfigInfo. An example is shown below:

### - CG-Configlnfo

This message is used by master eNB or gNB to request the SgNB or SeNB to perform certain actions, e.g. to establish, modify or release an SCG. The message may include additional information, e.g. to assist the SgNB or SeNB to set the SCG configuration. It can also be used by a CU to request a DU to perform certain actions, e.g. to establish or modify an MCG or SCG. It may be included in the SN Change Confirm in the case of CPC.

Direction: Master eNB or gNB to secondary gNB or eNB, alternatively CU to DU.

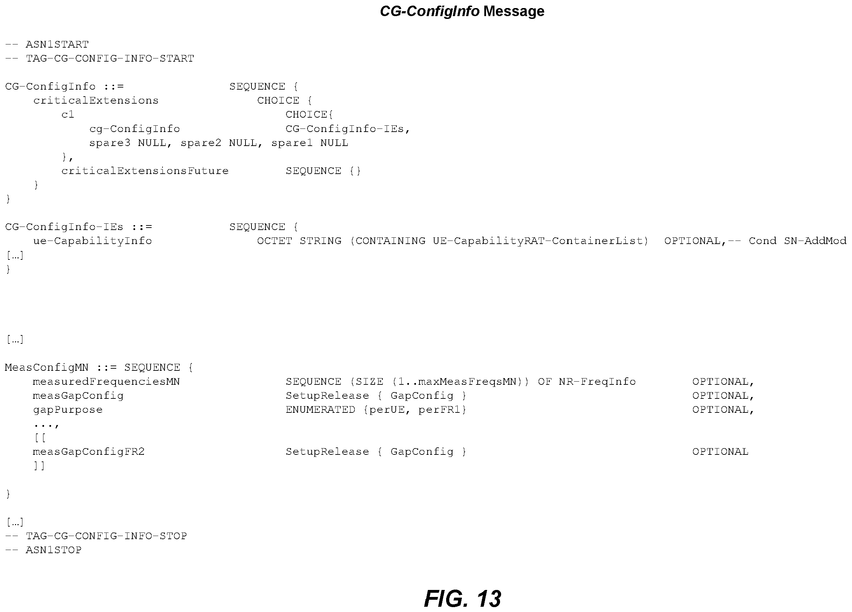

Figure 13 illustrates an example of the *CG-Configlnfo* message according to embodiments described herein. Field descriptions are as follows:

| ***CG-ConfigInfo* field descriptions** |
|---|
| ***measGapConfig*** |
| Indicates the FR1 and perUE measurement gap configuration configured by MN. |
| ***measGapConfigFR2*** |
| Indicates the FR2 measurement gap configuration configured by MN. |

In one example, the container CG-ConfigInfo (that includes MN information about measurement gaps) is included in the SN Change Confirm from the MN to the S-SN. That is for the case the SN Change Confirm is used for confirming CPC configuration to the S-SN. That example is shown below as it would modify TS 38.423:

### S-NODE CHANGE CONFIRM

This message is sent by the M-NG-RAN node to inform the S-NG-RAN node that the preparation of the S-NG-RAN node initiated S-NG-RAN node change was successful. Direction: M-NG-RAN node → S-NG-RAN node.

| **IE/Group Name** | **Presence** | **Range** | **IE type and reference** | **Semantics description** | **Criticality** | **Assigned Criticality** |
|---|---|---|---|---|---|---|
| Message Type | M | | 9.2.3.1 | | YES | reject |
| M-NG-RAN node UE XnAP ID | M | | NG-RAN node UE XnAP ID 9.2.3.16 | Allocated at the M-NG-RAN node | YES | ignore |
| S-NG-RAN node UE XnAP ID | M | | NG-RAN node UE XnAP ID 9.2.3.16 | Allocated at the S-NG-RAN node | YES | ignore |
| [...] | [...] | [...] | [...] | [...] | [...] | [...] |
| M-NG-RAN node to S-NG-RAN node Container | M | | OCTET STRING | Includes the CG-*ConfigInfo* message as defined in subclause 11.2.2 of TS 38.331 [10] | YES | reject |

**Step 1118:** The S-SN 1100, after having generated the CPC related measurement configuration (SCG MeasConfig, denoted RRCReconfiguration***), to be applied upon CPC configuration by the UE 1106, sends that to the MN 1102 in a message, e.g. an SN Modification Required (as that is a message modifying the UE's SCG configuration, as the measId(s) are configured within an SCG MeasConfig). The S-SN 1100 may also configure measurement reporting in that SCG measConfig in RRCReconfiguration***, in addition to the CPC related measurement configuration. This can be interpreted as what is referred to herein as the second procedure, in addition to the SN Change procedure. The S-SN 1100 may also configure measurement gaps, depending on the UE's current gap configuration (as indicate by the MN 1102, possibly in the SN Change Required, or previously known by the S-SN 1100), the UE capabilities, and the selected target candidate frequencies by the S-SN 1100.

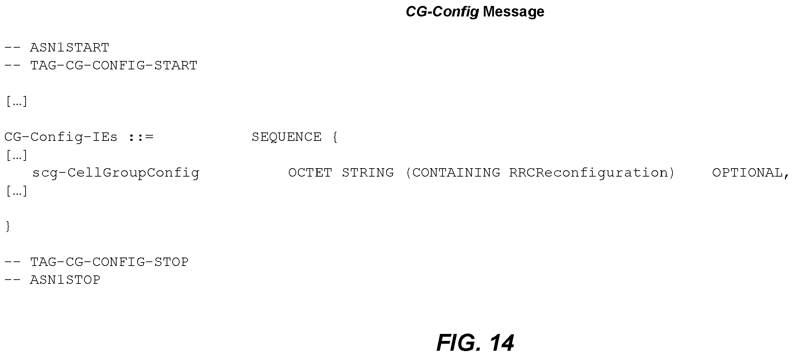

In one example, the SCG measConfig, within the denoted RRCReconfiguration*** is included in the S-NG-RAN node to M-NG-RAN node Container, that includes the CG-Config message as defined in subclause 11.2.2 of 3GPP TS 38.331. So, the field scg-CellGroupConfig is set to the RRCReconfiguration***, as shown in Figure 14.

In one sub-option, in addition to the SCG MeasConfig, configuring the measId(s), the S-SN 1100 may provide in the same message the execution conditions associated to the candidate cell(s), e.g. to the selected target candidate cell(s). That makes sense in the case there is an additional procedure for configuring CPC measConfig, i.e. there is a (conditional) Secondary Node Change (for the MN to obtain the T-SN target candidate cell configurations) followed by a Secondary Node Modification (for the MN to obtain the SCG MeasConfig for CPC, and in this sub-option the configuration for the execution conditions per target candidate frequency/ cell). Details on how the execution conditions can be encoded and provided from the S-SN to the MN are provided further below (entitled Further details about the Execution condition(s) per target candidate frequency/ cell).

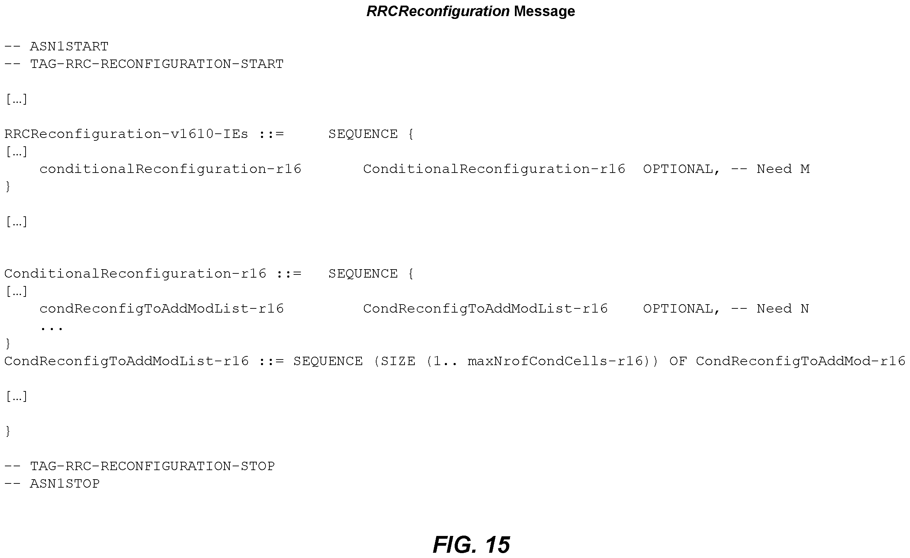

Upon reception of the message from the S-SN 1100 (e.g., SN Modification Required), the MN 1102 generates CPC in MN format. The MN 1102 first generates the main MN message (RRCReconfiguration) to be applied by the UE 1106 upon reception, including the Information Element (IE) ConditionalReconfiguration and the CondReconfigToAddModList, as shown in Figure 15, in MN format.

Figure 15 illustrates an example of the *RRCReconfiguration* message according to embodiments described herein.

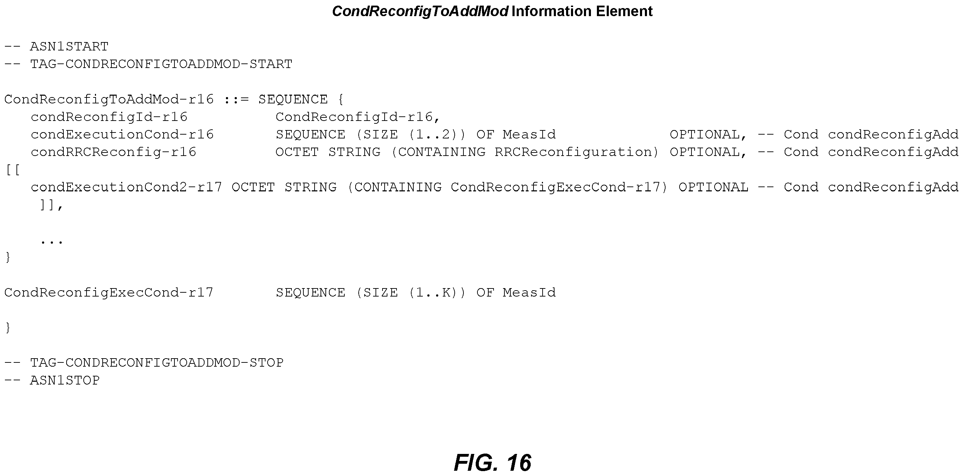

Then, the MN 1102 needs to generate the CondReconfigToAddMod for each target candidate cell. There can be different options, depending on whether the execution condition is transparent to the MN 1102 or not. In the first sub-option, shown in Figure 16, the execution condition set by the S-SN 1100 is transparent to the MN 1102, and in that case, is included for each corresponding candidate and/or corresponding candidate frequency, as provided by the S-SN (e.g., in CG-Config).

Figure 16 illustrates an example of the *CondReconfigToAddMod*IE according to embodiments described herein.

In a second sub-option, the execution condition set by the S-SN 1100 is not transparent to the MN 1102, and in that case, there is no need of a new field/IE in CondReconfigToAddMod. Instead, the MN 1102 sets the condExecutionCond-r16 to the one or two (or more) integers indicated by the S-SN 1100 as the execution conditions for the corresponding candidate frequency and/or cell.

Then, within each condRRCReconfig for a given target candidate, the MN 1102 generates an RRCReconfiguration in MN format (denoted RRCReconfiguration*) including as its SCG configuration the RRCReconfiguration** for each selected target candidate cell, as provided by the T-SN.

**Step 1120:** The MN 1102 provides the RRCReconfiguration message (in MN format, and generated by the MN 1102) including the CPC configuration (i.e., the condReconfigToAddModList-r16 or IE CondReconfigToAddModList-r16) to the UE 1106.

**Step 1122:** The UE 1106 sends an RRCReconfigurationComplete to the MN 1102.

**Step 1124:** The MN 1102 sends a SN Modification Confirm to the S-SN 1100.

After receiving the RRCReconfiguration in step 1120, the UE 1106 applies the CPC configuration and starts to monitor the fulfillment of the execution conditions that have been configured.

In one embodiment, the UE 1106 receives for a given candidate target cell for CPC the IE CondReconfigToAddMod. If that includes a first field for an execution condition, this indicates that the measID(s) associated are configured in the MCG MeasConfig. For example, that is the case, for example, if condExecutionCond-r16 of IE SEQUENCE (SIZE (1..2)) OF MeasId is included. Else, if that includes a second field for an execution condition, this indicates that the measID(s) associated are configured in the SCG MeasConfig. For example, that is the case, for example, if condExecutionCond2-r17 of IE OCTET STRING (CONTAINING CondReconfigExecCond-r17), defined as the IE SEQUENCE (SIZE (1..2)) OF MeasId is included.

In another variant of Solution 1, the T-SN 1104 needs to configure measurement gaps without considering delta signaling, i.e. the T-SN 1104 needs to release whatever measurement gap the UE 1106 has configured and configures a new measurement gap configuration. The reason is that the T-SN 1104 may not know the exact gap configuration the UE 1106 has, as that may be updated in the second procedure, according to Solution 1. Hence, this is some kind of full config at least for the perspective of measurement gaps.

### Solution 2: Opportunistic Provision of SCG measConfig for CPC

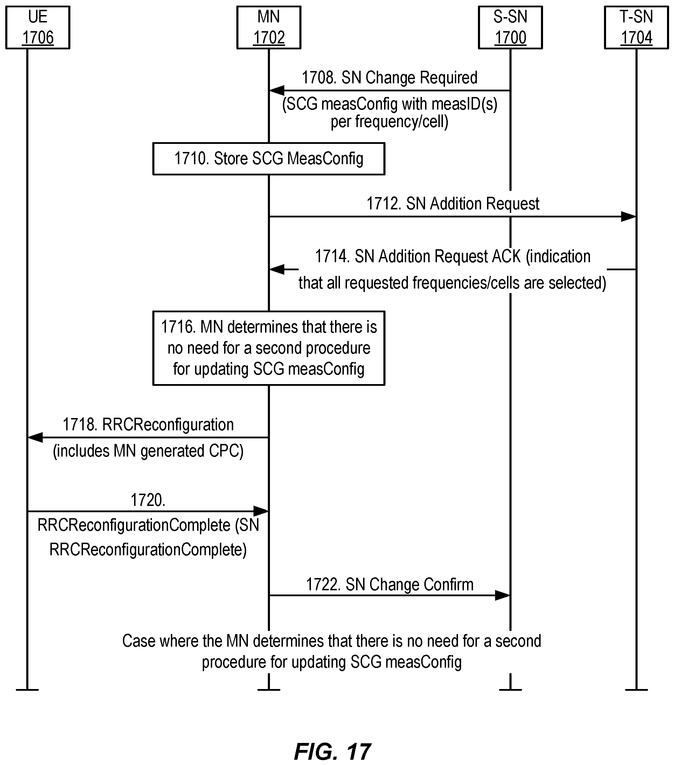

Figure 17 is a flow diagram of an example of a second solution, providing opportunistic provision of SCG *measConfig* for CPC according to embodiments described herein. The procedure of Figure 17 involves a S-SN 1700, a MN 1702, a candidate target SN denoted as T-SN 1704, and a UE 1706. The example of Figure 17 illustrates a case where the MN 1702 determines that there is no need for a second procedure for updating SCG measConfig.

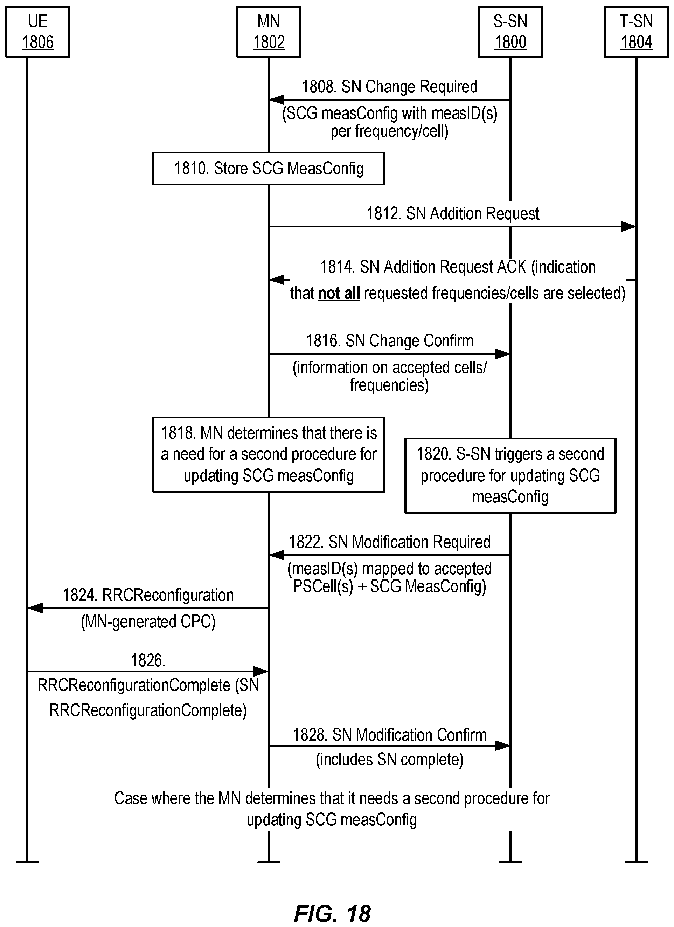

Figure 18 is a flow diagram of another example the second solution, providing opportunistic provision of SCG *measConfig* for CPC according to embodiments described herein. The procedure of Figure 18 involves a S-SN 1800, a MN 1802, a candidate target SN denoted as T-SN 1804, and a UE 1806. The example of Figure 18 illustrates a case where the MN 1810 determines that it needs a second procedure for updating SCG measConfig.

In the following, different steps of the procedures of Figures 17 and 18 are described in further detail. When referring to both Figure 17 and 18, the various nodes are referred to by both reference numbers (e.g., S-SN 1700/1800, MN 1702/1802, etc.).

**Step 1708/1808:** In one set of embodiments, the S-SN 1700/1800 transmits a message to the MN 1702/1802 (e.g. SN Change Required) including an indication that the message is for a Conditional Reconfiguration (e.g. CPC) and including information of target candidate cells of at least one target candidate SN (e.g. N target candidate PSCells, including measurement results for at least one PSCell candidate), possibly in different frequency (e.g. having different SSB frequency/ ARFCN for the SSB). In this example, the at least one target candidate SN includes the T-SN 1704/1804. The various ways that information can be included can be as described in Solution 1, e.g., in CG-Config container.

In addition, the message opportunistically includes the execution conditions (i.e., the measId(s) associated to the target candidate cells and/or frequencies) and/or the SCG measConfig for CPC (that may include a measurement gap configuration according to the selected frequencies). There are different ways to include the execution conditions in the message from the S-SN 1700/1800 to the MN 1702/1802, as described further below. Upon reception, the MN 1702/1802 stores the SCG MeasConfig for CPC and/or the execution conditions (and association to target cell and/or frequency candidates).

In the case the S-SN 1700/1800 includes a measurement gap configuration in the SCG MeasConfig for CPC, opportunistically, the S-SN 1700/1800 may also indicate gap related information to the MN 1702/1802.

Another alternative is to define the inclusion of the SCG measConfig for CPC and/or the execution conditions per cell/ frequency candidates in the message from the S-SN 1700/1800 to the MN 1702/1802 (e.g., in the SN Change Required) as optional. If that is included, the S-SN 1700/1800 wants to indicate that the opportunistic approach can be used by the MN 1702/1802, i.e., that the MN 1702/1802 can apply at least one of the rules defined in step 1716/1818, and possibly skip the second procedure. If that is not included in the message, the MN 1702/1802 is aware that is needs to act as defined with respect to Solution 1 (i.e., it always waits for a second procedure triggered by the S-SN 1700/1702).

**Step 1710/1810:** The MN 1702/1802 stores the SCG measConfig.

**Step 1712/1812:** This is similar to Step 1110 in Solution 1.

**Step 1714/1814:** After the selection, the (candidate) T-SN 1704/1804 sends a message to the MN 1702/1802 (e.g. SN Addition Request Ack) including the information of the selected candidate cells, including for each selected candidate an RRC Reconfiguration to be applied upon the fulfillment of the execution condition, denoted RRCReconfiguration** (this is the SCG configuration to be provided to the UE 1706/1806 as part of the MN generated CPC configuration).

The T-SN 1704/1804, in the SN Addition Request Ack, includes *further information on the selected cell candidates and*/*or frequencies.* That information can be, for example, a list of cell identity (e.g., physical cell identity, global cell identity) + frequency information. There are different possible ways to encode this information in the SN Addition Request Ack message, as described in Step 1112 with respect to Solution 1, e.g., using a single CG-Config container. Even if the T-SN 1704/1804 has selected multiple target candidate cells, a single container may be used but within the container there are multiple RRC Reconfiguration messages (denoted RRCReconfiguration(s)**) to be applied by the UE 1706/1806 upon fulfillment of the execution condition, where there is at least one RRC Reconfiguration message per target candidate cell that has been selected.

**Step 1716/1818:** In one option, the *further information on the selected cell candidates and*/*or frequencies* can be interpreted by the MN 1702/1802 (e.g., is included in text format understandable by the MN 1702/1802, e.g., in XnAP). Based on that, the MN 1702/1802 determines whether a second procedure will be needed or whether the MN 1702/1802 can generate and send to the UE 1706/1806 the RRCReconfiguration including the CPC configuration (in MN format), including the stored provided SCG measConfig for CPC (and the execution conditions mapped to the target candidate cells/ frequencies) provided by the S-SN 1700/1800 (e.g., in the SN Change Required).

The determination by the MN 1702/1802 is based on the *further information on the selected cell candidates and*/*or frequencies.*
- If the MN 1702/1802 determines that i) the execution conditions are set by the S-SN 1700/1800 per frequency, and ii) the *further information on the selected cell candidates and*/*or frequencies* indicates that the T-SN 1704/1804 (or all candidate T-SN(s)) has/have selected all the frequencies, or in other words, that there is a configuration for the UE 1706/1806 for at least one target candidate cell per frequency indicated by the S-SN 1700/1800 in the SN Change Required, the MN 1702/1802 determines that there is no need for a second procedure. Thus, the MN 1702/1802 generates and sends to the UE 1706/1806 the RRCReconfiguration including the CPC configuration (in MN format), including the stored SCG measConfig for CPC (and the execution conditions mapped to the target candidate cells/ frequencies), which had already provided by the S-SN (e.g., in the SN Change Required) **(Step 1718/1824).**
- If the MN 1702/1802 determines that i) the execution conditions are set by the S-SN 1700/1800 per frequency, and ii) the *further information on the selected cell candidates and*/*or frequencies* indicates that the T-SN 1704/1804 (or all candidate T-SN(s)) has/have **NOT** selected all the frequencies, or in other words, that there is at least one frequency indicated by the S-SN 1700/1800 in the SN Change Required for which there is no selected target candidate cell by the T-SN 1704/1804, the MN 1702/1802 determines that there is a need for a second procedure and waits until it receives an updated SCG MeasConfig for CPC from the S-SN 1700/1800 (and updated execution conditions). Only after this updated SCG MeasConfig for CPC happens, the MN 1702/1802 generates and sends to the UE 1706/1806 the RRCReconfiguration including the CPC configuration (in MN format), including the updated SCG measConfig for CPC (and the execution conditions mapped to the target candidate cells/ frequencies), provided by the S-SN (e.g., in the SN Modification Required) **(Step 1718/1824).**
- If the MN 1702/1802 determines that i) the execution conditions are set by the S-SN 1700/1800 per cell, and ii) the *further information on the selected cell candidates and*/*or frequencies* indicates that the T-SN 1704/1804 (or all candidate T-SN(s)) has/have selected all the cells, or in other words, that there is a configuration for the UE 1706/1806 for all target candidate cells indicated by the S-SN 1700/1800 in the SN Change Required, the MN 1702/1802 determines that there is no need for a second procedure. Thus, the MN 1702/1802 generates and sends to the UE 1706/1806 the RRCReconfiguration including the CPC configuration (in MN format), including the stored SCG measConfig for CPC (and the execution conditions mapped to the target candidate cells/ frequencies), which had already provided by the S-SN 1700/1800 (e.g., in the SN Change Required) **(Step 1718/1824).**
- If the MN 1702/1802 determines that i) the execution conditions are set by the S-SN 1700/1800 per cell, and ii) the *further information on the selected cell candidates and*/*or frequencies* indicates that the T-SN 1704/1804 (or all candidate T-SN(s)) has/have **NOT** selected all the cells, or in other words, that there is at least one cell indicated by the S-SN 1700/1800 in the SN Change Required that has not been selected by the T-SN 1704/1804, the MN 1702/1802 determines that there is a need for a second procedure and waits until it receives an updated SCG MeasConfig for CPC from the S-SN 1700/1800 (and updated execution conditions). Only after this updated SCG MeasConfig for CPC (and updated execution conditions) happens, the MN 1702/1802 generates and sends to the UE 1706/1806 the RRCReconfiguration including the CPC configuration (in MN format), including the updated SCG measConfig for CPC (and the execution conditions mapped to the target candidate cells/ frequencies), provided by the S-SN 1700/1800 (e.g., in the SN Modification Required) **(Step 1718/1824).**

As described above, the way the MN 1702/1802 determines whether it should configure the UE 1706/1806 with the stored SCG meaConfig for CPC or wait for a second procedure triggered by the S-SN 1700/1800 with an updated SCG MeasConfig is based on the understanding concerning the execution condition configuration, e.g. whether they are defined per frequency and/or per cell candidate. There can be sub-options for this determination:
- In one option, the execution conditions are always defined per frequency by the S-SN 1700/1800, and that may be specified so that the MN is always aware of that.
- In one option, the execution conditions are always defined per cell by the S-SN 1700/1800, and that may be specified so that the MN 1702/1802 is always aware of that.
- In another option, the execution conditions can either be defined per cell or per frequency by the S-SN 1700/1800, and, as there can be these different alternatives, the S-SN 1700/1800 needs to indicate which alternative the S-SN 1700/1800 is selecting, e.g., in CG-Config or in a field in XnAP message.
- In another option, the execution conditions can either be defined per cell, per frequency or both per cell and frequency by the S-SN 1700/1800, and, as there can be these different alternatives, the S-SN 1700/1800 needs to indicate which alternative the S-SN 1700/1800 is selecting, e.g., in CG-Config or in a field in XnAP message. In other words, the S-SN 1700/1800 may determine to configure the execution condition per frequency, e.g. for frequency A, and may determine to configure the execution condition per cell (for cells in frequency B), at the same configuration for the same UE 1706/1806.

**Steps 1718, 1720, and 1722:** Figure 17 shows an example in which the opportunistic approach prevents the need for a second procedure. Referring to Figure 17, if the MN 1702 determines that a second procedure is not needed for updating SCG MeasConfig for CPC, the follow up steps between the MN 1702 and the UE 1706 are similar to the steps defined in Solution 1 for step 1120) and step 1122). In that case, it is also assumed that the S-SN 1700 has configured measurement gaps for the UE 1706 to measure a set of frequencies as target candidates that were also accepted as candidates by the T-SN candidate(s).

**Steps 1816, 1820, 1822, 1824, 1826, and 1828:** Figure 18 shows an example in which the opportunistic approach cannot be prevent the need for a second procedure and the MN initiates the second procedure as described in Solution 1. Referring to Figure 18, if the MN 1802 determines that a second procedure is needed for updating SCG MeasConfig for CPC, upon transmitting the SN Change Confirm to the S-SN 1800 (step 1816), including the further information on the selected cell candidates and/or frequencies or any information that may have been derived from it and enabling the S-SN 1800 to derive that a second procedure is needed, the MN 1802 waits for the S-SN 1800 to trigger a second procedure, which is done in step 920. The S-SN 1800, upon receiving the SN Change Confirm including the further information on the selected cell candidates and/or frequencies, determines that it needs to update the SCG measConfig for CPC (and execution conditions per frequency and/or cell candidate) and sends an SN Modification Required message to the MN 1700/1800 including the updated SCG MeasConfig for CPC and the execution conditions (steps 1820 and 1822). The MN 1702/1802 then generates the RRCReconfiguration with the CPC configuration and provides it to the UE 1806 (step 924). The UE responds with an RRCReconfiguration complete (step 1826), and the MN 1802 sends an SN Modification Confirm to the S-SN 1800.

In another option, the *further information on the selected cell candidates and*/*or frequencies* does not have to be interpreted by the MN 1702/1802. Upon receiving the SN Addition Request Ack form the T-SN 1704/1804, the MN 1702/1802 sends a message to the S-SN 1700/1800 with the *further information on the selected cell candidates and*/*or frequencies* and starts a timer. If the timer expires and no message from the S-SN 1700/1800 is received to indicate the update of the SCG measConfig for CPC, the MN 1702/1802 generates the RRCReconfiguration including CPC, including the stored SCG measConfig for CPC (e.g., received in the SN Change Required) and sends it to the UE 1706/1806. Else, if the MN 1702/1802 receives a message from the S-SN 1700/1800nwhile the timer is running, to indicate the update of the SCG measConfig for CPC, the MN 1702/1802 uses the updated SCG measConfig for CPC and generates the RRCReconfiguration including CPC, including the updated SCG measConfig for CPC (e.g., received in the SN Change Required) and sends it to the UE 1706/1806.

In yet another option, the *further information on the selected cell candidates and*/*or frequencies* is limited to a simplified indication, indicating whether all frequencies and/or cells have been selected or not by the T-SN 1704/1804.
- In one sub-option, the simplified indication indicates to the MN 1702/1802 that NOT all frequency candidates have been selected. In case the MN 1702/1802 determines that the execution conditions are set per frequency by the S-SN 1700/1800, the MN 1702/1802 determines that there is a need for a second procedure for updating the SCG measConfig for CPC.
- In another sub-option, the simplified indication indicates to the MN 1702/1802 that all frequency candidates have been selected. In case the MN 1702/1802 determines that the execution conditions are set per frequency by the S-SN 1700/1800, the MN 1702/1802 determines that there is no need for a second procedure for updating the SCG measConfig for CPC.

- In another sub-option, the simplified indication indicates to the MN 1702/1802 that NOT all cell candidates have been selected, but all frequencies (at least one cell per frequency). In case the MN 1702/1802 determines that the execution conditions are set per frequency by the S-SN 1700/1800, the MN 1702/1802 determines that there is no need for a second procedure for updating the SCG measConfig for CPC.
- In another sub-option, the simplified indication indicates to the MN 1702/1802 that NOT all cell candidates have been selected. In case the MN 1702/1802 determines that the execution conditions are set per cell by the S-SN 1700/1800, the MN 1702/1802 determines that there is need for a second procedure for updating the SCG measConfig for CPC.
- In another sub-option, the simplified indication indicates to the MN 1702/1802 that all cell candidates have been selected. In case the MN 1702/1802 determines that the execution conditions are set per cell by the S-SN 1700/1800, the MN 1702/1802 determines that there is no need for a second procedure for updating the SCG measConfig for CPC.

### Solution 3: Provision of Multiple Versions of SCG measConfig for CPC

In this set of embodiments, the S-SN provides multiple versions of the SCG measConfig for CPC in the first message to the MN, e.g. in the SN Change Required. The versions are associated to the target candidate cells / frequencies the S-SN includes the message to the MN and, based on the further information on the selected cell candidates and/or frequencies from the T-SN candidate, the MN selects which version of the SCG measConfig for CPC it uses to configure the UE.

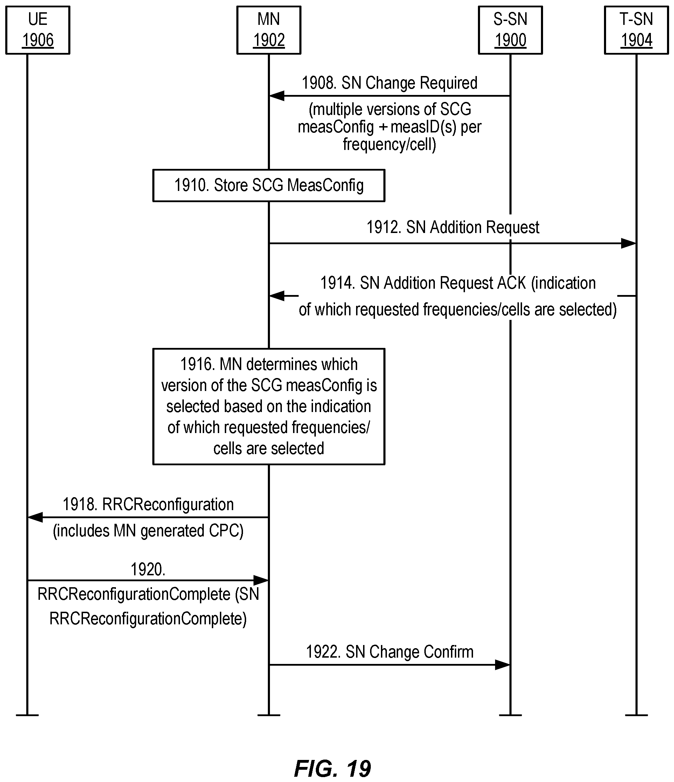

Figure 19 is a flow diagram of a third solution, for provision of multiple versions of SCG measConfig for CPC according to embodiments described herein. The procedure of Figure 19 involves a S-SN 1900, a MN 1902, a T-SN 1904, and a UE 1906.

**Step 1908:** In one set of embodiments, the S-SN 1900 transmits a message to the MN 1902 (e.g., SN Change Required) including an indication this is for a Conditional Reconfiguration (e.g., CPC) and including information of target candidate cells of at least one target candidate SN (e.g., N target candidate PSCell, including measurement results for at least one PSCell candidate), possibly in different frequency (e.g., having different SSB frequency/ ARFCN for the SSB). The various way that information can be included can be as described in Solution 1, e.g. in CG-Config container. In this example, the at least one target candidate SN includes the T-SN 1904.

In addition, the message of step 1908 includes at least one of the following:
- Multiple versions of the execution conditions (i.e., the measId(s) associated to the target candidate cells and/or frequencies). There are different ways to include the execution conditions in the message from the S-SN 1900 to the MN 1902, as described further below.
- Multiple versions of the SCG measConfig for CPC. There are different ways to include these multiple versions of the SCG measConfig for CPC.
   ∘ If the execution conditions are set per frequency: SCG measConfig for CPC configures measId(s) are defined per frequency, i.e. no cell-specific measId. In that case, for each possible subset of requested frequencies candidates there should be an SCG measConfig for CPC associated.
      ▪ For example, in the case of execution conditions are set per frequency, if the S-SN 1900 includes a request for candidate cells in frequency A (with execution condition associated to measID=7) and frequency B (with execution condition associated to measID=11), the S-SN 1900 includes the following versions of the SCG measConfig for CPC:
         - SCG measConfig(1) → SCG measConfig for CPC only for measID=7 (frequency A)
         - SCG measConfig(2) → SCG measConfig for CPC only for measID=11 (frequency B)
         - SCG measConfig(3) → SCG measConfig for CPC for both measID=7 and measdID=11 (both frequencies A and B)
      • For example, if frequencies A, B, C, there should be version for A only, B only, C only, A + B, A + C, A + D. And, in general terms, if a number of N frequencies, there should be N x (N-1) versions of SCG measConfig.
      ▪ To avoid repetition and reduce signaling from the S-SN 1900 to the MN 1902, and facilitate MN implementation, there can be an identifier associated to each of the multiple versions where the associated it given per frequency.
   ∘ If the execution conditions are set per cell: SCG measConfig for CPC configures measId(s) are defined per cell. In that case, for each possible subset of requested cells candidates there should be an SCG measConfig for CPC associated.

**Step 1910:** Upon reception, the MN 1902 stores the different versions of the SCG MeasConfig for CPC and/or the execution conditions (and association to target cell and/or frequency candidates).

The method also comprises the possibility that the S-SN 1900 includes (e.g., in the SN Change Required for CPC) multiple version of measurement gap configurations to the UE 1906, each associated to a set of frequencies (which may be known to the UE 1906 or only know to the network, e.g. to the S-SN 1900). That message may also include measurement gap related configuration to the MN 1902 (e.g., in the RRC container or in XnAP) so that the MN 1902 knows which measurement gap the UE 1906 may be configured with, so that it acts accordingly, e.g. when scheduling the UE 1906, taking gaps for measurements into account.

Another alternative is to define the inclusion of the multiple versions of the SCG measConfig for CPC and/or the execution conditions per cell/ frequency candidates in the message from the S-SN 1900 to the MN 1902 (e.g., in the SN Change Required) as optional. If that is included, the S-SN 1900 wants to indicate that a second procedure for updating the SCG measConfig for CPC is not required. If that is not included in the message, the MN 1902 is aware that is needs to act as defined in Solution 1 (i.e., it always waits for a second procedure triggered by the S-SN 1900).

**Step 1912)** This is similar to Step 1110) in Solution 1.

**Step 1914)** After the selection, the (candidate) T-SN 1904 sends a message to the MN 1902 (e.g., SN Addition Request Ack) including the information of the selected candidate cells to the MN 1902, including for each selected candidate an RRC Reconfiguration to be applied upon the fulfillment of the execution condition, denoted RRCReconfiguration** (this is the SCG configuration to be provided to the UE as part of the MN generated CPC configuration).

The T-SN 1904, in the SN Addition Request Ack, includes *further information on the selected cell candidates and*/*or frequencies.* That information can be, for example, a list of cell identity (e.g., physical cell identity, global cell identity) + frequency information. There are different possible ways to encode this information in the SN Addition Request Ack message, as described in Step 1112) of Solution 1 e.g. using a single CG-Config container. Even if the T- SN 1904 has selected multiple target candidate cells, a single container may be used but within the container there are multiple RRC Reconfiguration messages (denoted RRCReconfiguration(s)**) to be applied by the UE 1906 upon fulfillment of the execution condition, where there is at least one RRC Reconfiguration message per target candidate cell that has been selected.

**Step 1916:** In one option, the *further information on the selected cell candidates and*/*or frequencies* can be interpreted by the MN 1902 (e.g., is included in text format understandable by the MN 1902, e.g., in XnAP). The MN 1902 determines which SCG MeasConfig to configure the UE 1906 based on the *further information on the selected cell candidates and*/*or frequencies.* If we use the previous example for the versions provided to the MN 1902, and if the T-SN 1904 indicates that only cells of frequency A were selected as candidates, then the MN 1902 selects SCG measConfig(1); if the T-SN 1904 indicates that only cells of frequency B were selected as candidates, then the MN 1902 selects SCG measConfig(2); if the T-SN 1904 indicates that cells of both frequencies A and B were selected as candidates, then the MN 1902 selects SCG measConfig(3).

**Steps 1918 and 1920:** After the MN 1902 selects the SCG MeasConfig for CPC, and the execution condition(s) for the selected cells/ frequencies the follow up steps between the MN 1902 and the UE 1906 are similar to the steps defined with respect to Solution 1 for step 1120) and step 1122).

**Step 1922:** In one option, after the MN 1902 receives the RRCReconfigurationComplete message from the UE 1906 (or equivalent message that acks the reception of the CPC configuration), the MN 1902 sends to the S-SN an SN Change Confirm, possibly including an indication of the selected cells and/or frequencies by the T-SN.

### Solution 4: UE Ignores or Releases Unnecessary SCG measConfig for CPC

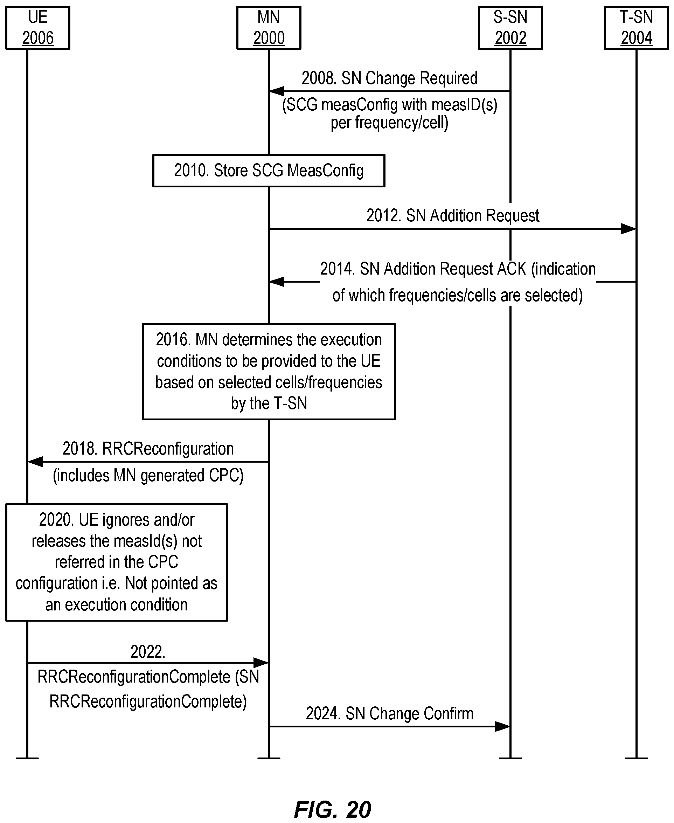

Figure 20 is a flow diagram of a fourth solution, where the UE ignores or releases unnecessary SCG measConfig for CPC according to embodiments described herein. The procedure involves a S-SN 2000, a MN 2002, a T-SN 2004, and a UE 2006.

**Step 2008:** In one set of embodiments, the S-SN 2000 transmits a message to the MN 2002 (e.g., SN Change Required) including an indication this is for a Conditional Reconfiguration (e.g., CPC) and including information of target candidate cells of at least one target candidate SN (e.g., N target candidate PSCell, including measurement results for at least one PSCell candidate), possibly in different frequency (e.g., having different SSB frequency/ ARFCN for the SSB). The various way that information can be included can be as described in Solution 1, e.g. in CG-Config container. In this example, the at least one target candidate SN includes the T-SN 1104.

In addition, the message includes the execution conditions (i.e., the measId(s) associated to the target candidate cells and/or frequencies) and/or the SCG measConfig for CPC. The SCG MeasConfig for CPC may also include a measurement gap configuration for the UE 2006 to perform measurement in frequencies of the of the PSCell candidates, if needed. The message may also include information on the measurement gaps from the S-SN 2000 to the MN 2002. There are different ways to include the execution conditions in the message from the S-SN 2000 to the MN 2002, as described further below.

**Step 2010:** Upon reception, the MN 2002 stores the SCG MeasConfig for CPC and/or the execution conditions (and association to target cell and/or frequency candidates). This is used later by the MN 2002 to understand which execution conditions it needs to select to generate the CPC configuration to be included in the RRCReconfiguration that is sent to the UE 2006.

Another alternative is to define the inclusion of the SCG measConfig for CPC in the message from the S-SN 2000 to the MN 2002 (e.g., in the SN Change Required) as optional. If that is included, the S-SN 2000 wants to indicate that this is to be provided to the UE 2006, regardless of the outcome of the selected cells and/or frequency by the candidate T-SN 2004.

**Step 2012:** This is similar to Step 1110) in Solution 1.

**Step 2014:** After the selection, the candidate T-SN 2004 sends a message to the MN 2002 (e.g., SN Addition Request Ack) including the information of the selected candidate cells to the MN 2000, including for each selected candidate an RRC Reconfiguration to be applied upon the fulfillment of the execution condition, denoted RRCReconfiguration** (this is the SCG configuration to be provided to the UE as part of the MN generated CPC configuration).

The T-SN 2000, in the SN Addition Request Ack, includes *further information on the selected cell candidates and*/*or frequencies.* That information can be, for example, a list of cell identity (e.g., physical cell identity, global cell identity) + frequency information. There are different possible ways to encode this information in the SN Addition Request Ack message, as described in Step 1112) of Solution 1.

**Step 2016:** In one option, the *further information on the selected cell candidates and*/*or frequencies* can be interpreted by the MN 2002 (e.g., is included in text format understandable by the MN 2002, e.g., in XnAP). Based on that, the MN 2002 determines which execution conditions are to be provided to the UE 2006. The whole set of execution conditions have been provided by the S-SN 2006 in the first message (e.g., the SN Change Required, possibly in the CG-Config container), from which the MN 2002 needs to select the execution conditions associated to the selected frequencies (if conditions are defined per frequency) and/or per cell (if conditions are defined per cell).

**Step 2018:** Upon reception of the message from the T-SN 2004 (e.g., SN Addition Request Ack) and making the determination of step 2016, the MN 2002 generates CPC in MN format. The MN 2002 generates the main MN message (RRCReconfiguration) to be applied by the UE 2006 upon reception, including the Information Element (IE) ConditionalReconfiguration and the CondReconfigToAddModList, as in Figure 15, in MN format.

Then, the MN 2002 generates the CondReconfigToAddMod for each target candidate cell. There can be different options, depending on whether the execution condition is transparent to the MN 2002 or not. In the first sub-option, shown in Figure 16, the execution condition set by the S-SN 2000 is transparent to the MN 2002, and in that case, is included for each corresponding candidate and/or corresponding candidate frequency that have been selected by the candidate T-SN 2004 (i.e. the other execution conditions, for non-selected cells/frequencies candidates are deleted/ released by the MN 2002), as shown in Figure 16 for one of the selected target candidate cells.

In a second sub-option, the execution condition set by the S-SN 2000 is not transparent to the MN 2002, and in that case, there is no need of a new field/IE in CondReconfigToAddMod. Instead, the MN 2002 sets the condExecutionCond-r16 to the one or two (or more) integers indicated by the S-SN 2000 as the execution conditions for the corresponding candidate frequency and/or cell.

Then, within each condRRCReconfig for a given target candidate, the MN 2002 generates an RRCReconfiguration in MN format (denoted RRCReconfiguration*) including as its SCG configuration the RRCReconfiguration** for each selected target candidate cell, as provided by the T-SN 2004.

**Step 2020.** The UE 2006 receives the RRCReconfiguration including an SCG container (denoted an RRCReconfiguration*** including an SCG MeasConfig for CPC and set as nr-scg, in case of NR), and including a CPC configuration (in MN format), IE Conditional Reconfiguration. Then, within the SCG MeasConfig for CPC, the UE 2006 ignores and/or releases the measId(s) not referred in the CPC configuration, i.e. not pointed as an execution condition in the CPC configuration. In other words, for each measId, before the UE 2006 determines whether a measId is configured in SCG MeasConfig for CPC is to be measured, the UE 2006 first checks if the measId(s) associated to CPC (i.e., reporting configuration indicates reportType set to conditional reconfiguration and/or CPC) is included in the CPC configuration, i.e., if it included as an execution condition for a configured target candidate cell.

For example, if the UE 2006 receives an SCG measConfig including configurations for measId=1, measId=2, measId=3, all of them having reporting configuration associated to a conditional reconfiguration, e.g., each reportType is set to condTriggerConfig-r16 of Information Element (IE) CondTriggerConfig-r16). And, if the execution condition in CPC for target candidate cell A is set to measId=1, the UE 2006 performs measurements associated to measId=1. But if there is no execution condition in CPC set to measId=2 or measId=3, the UE 2006 does not have to perform measurements associated to measId=2 or measId=3. And, in addition, it may release the configurations associated to measId=2 or measId=3 (e.g., reportConfig is not referred to other measId referred as execution conditions).

In one option, to be required to perform a measurement associated to a measId in the SCG measConfig, the following condition would need to be fulfilled:
- The UE 2006 performs measurements if for each measId, if the reportType for the associated reportConfig is condTriggerConfig, the measId is set to at least one condExecutionCond associated to a condReconfigId;
   ∘ In other words, the UE 2006 performs measurements for a measId whose reportConfig is for CPC only if that measId is referred in at least one condExecutionCond (wherein the condExecutionCond is part of the conditional reconfiguration, which may be in MN format and for SN-initiated inter-SN CPC).

Below, an example of how this can be defined in the RRC specifications is shown.

### 5.5.3 Performing measurements

### 5.5.3.1 General

[...] The UE shall: [...]
1> for each measldincluded in the *measIdList* within *VarMeasConfig*: [...]
   2> if the *reportType* for the associated *reportConfig* is *periodical, eventTriggered* or *condTriggerConfig.*
      3> if a measurement gap configuration is setup, or
      3> if *reportType* for the associated *reportConfig* is *condTriggerConfig* and the measId is set to at least one *condExecutionCond* associated to a *condReconfigId*:
      3> if the UE does not require measurement gaps to perform the concerned measurements:
         4> if *s-MeasureConfig* is not configured, or
         4> if *s-MeasureConfig* is set to *ssb-RSRP* and the NR SpCell RSRP based on SS/PBCH block, after layer 3 filtering, is lower than *ssb-RSRP,* or
         4> if *s-MeasureConfig* is set to *csi-RSRP* and the NR SpCell RSRP based on CSI-RS, after layer 3 filtering, is lower than *csi-RSRP.*
            5> if the *measObject* is associated to NR and the *rsType* is set to *csi-rs.*
               6> if reportQuantityRS-Indexes and maxNrofRS-IndexesToReport for the associated reportConfig are configured:
                  7> derive layer 3 filtered beam measurements only based on CSI-RS for each measurement quantity indicated in *reportQuantityRS-Indexes,* as described in 5.5.3.3a;
               6> derive cell measurement results based on CSI-RS for the trigger quantity and each measurement quantity indicated in *reportQuantityCell* using parameters from the associated *measObject,* as described in 5.5.3.3;
            5> if the *measobject* is associated to NR and the *rsType* is set to *ssb*:
               6> if reportQuantityRS-Indexes and maxNrofRS-IndexesToReport for the associated reportConfig are configured:
                  7> derive layer 3 beam measurements only based on SS/PBCH block for each measurement quantity indicated in *reportQuantityRS-Indexes,* as described in 5.5.3.3a;
               6> derive cell measurement results based on SS/PBCH block for the trigger quantity and each measurement quantity indicated in *reportQuantityCell* using parameters from the associated *measObject,* as described in 5.5.3.3;
            5> if the *measObject* is associated to E-UTRA:
               6> perform the corresponding measurements associated to neighbouring cells on the frequencies indicated in the concerned *measObject,* as described in 5.5.3.2;
            5> if the measObject is associated to UTRA-FDD:
               6> perform the corresponding measurements associated to neighbouring cells on the frequencies indicated in the concerned *measObject,* as described in 5.5.3.2;
         4> if the *measRSSI-ReportConfig* is configured in the associated *reportConfig.*
            5> perform the RSSI and channel occupancy measurements on the frequency indicated in the associated *measObject,* [...]
            2> perform the evaluation of reporting criteria as specified in 5.5.4, except if *reportConfig* is *condTriggerConfig.*
NOTE 1: The evaluation of conditional reconfiguration execution criteria is specified in 5.3.5.13. [...]

The method also comprises the UE 2006 selecting an appropriated measurement gap configuration depending on the frequencies (and/or measurement objects) it needs to perform measurements for CPC. For example, the UE 2006 may have been provided in the SCG measConfig with one or multiple gap configurations, that depend on the frequencies the UE 2006 needs to measure. And, upon determining the measId(s) used as execution conditions in the CPC configuration, the UE 2006 determines which frequencies are also to be measured i.e., the ones associated to the measurement objects referred by the measId(s) used as execution conditions in the CPC configuration. Then, upon determining these frequencies and measurement objects, the UE 2006 determines which measurement gap configuration it should use (i.e., it should apply). That assumes that in the measurement gap configuration(s) there is an indication of which frequencies and/or frequency combinations they are associated with.

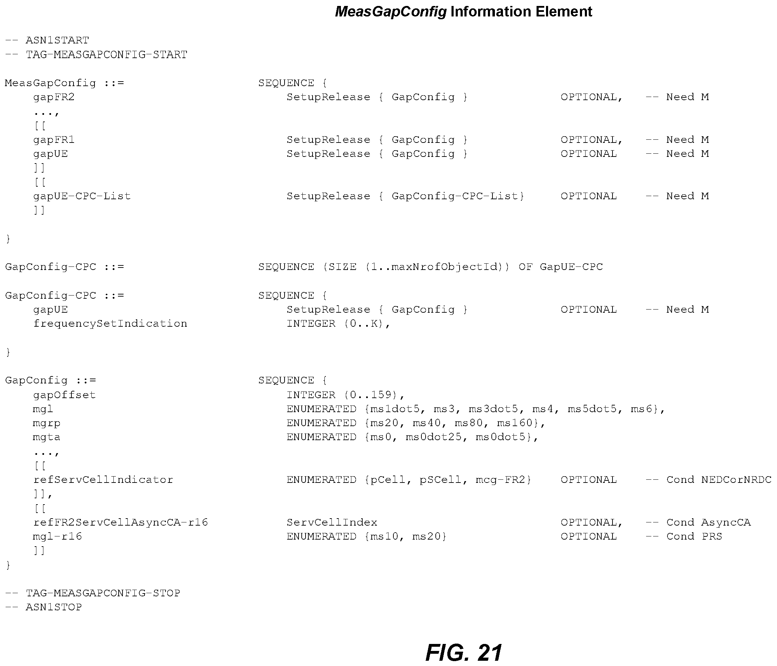

An example is shown in Figure 21. If gaps per UE is to be used, the UE 2006 receives in the SCG MeasConfig (as generated by the S-SN) the list of gap configurations (e.g., gapUE-CPC-List, SEQUENCE (SIZE (1..maxNrofObjectId)) OF GapUE-CPC), each gap configuration (e.g., GapUE-CPC) being represented in the IE associated to a frequency set indication (frequencySetIndication). The frequency set indication is a way for the S-SN 2000 to indicate to the UE 2006 which frequency set to be measure corresponds to which measurement gap configuration to be applied. For the gaps per frequency range (for FR1 and/or FR2) a rule can be defined based on the presence of not of FR1 and/or FR2 target cell candidates in the CPC configuration.

Figure 21 illustrates an example of the *MeasGapConfig* IE according to embodiments described herein. Field descriptions are as follows:

| ***MeasGapConfig* field descriptions** |
|---|
| ***gapFR1*** |
| Indicates measurement gap configuration that applies to FR1 only. In (NG)EN-DC, *gapFR1* cannot be set up by NR RRC (i.e. only LTE RRC can configure FR1 measurement gap). In NE-DC, *gapFR1* can only be set up by NR RRC (i.e. LTE RRC cannot configure FR1 gap). In NR-DC, *gapFR1* can only be set up in the *measConfig* associated with MCG. *gapFR1* can not be configured together with *gapUE.* The applicability of the FR1 measurement gap is according to Table 9.1.2-2 and Table 9.1.2-3 in TS 38.133 [14]. The UE does not applv this configuration in case it does not have to measure FR1 frequencies e.g. if a given measId in SCG MeasConfig is associated to a measurement object for FR1, but the measId is not used in CPC configuration.point to measurement, and there is no other measId associated to a measurement object for FR1 (e.g. for measurement reporting). |
| ***gapFR2*** |
| Indicates measurement gap configuration applies to FR2 only. In (NG)EN-DC or NE-DC, *gapFR2* can only be set up by NR RRC (i.e. LTE RRC cannot configure FR2 gap). |
| In NR-DC, *gapFR2* can only be set up in the *measConfig* associated with MCG. *gapFR2* cannot be configured together with *gapUE.* The applicability of the FR2 measurement gap is according to Table 9.1.2-2 and Table 9.1.2-3 in TS 38.133 [14]. |
| The UE does not apply this configuration in case it does not have to measure FR2 frequencies e.g. if a given measId in SCG MeasConfig is associated to a measurement object for FR2, but the measId is not used in CPC configuration.point to measurement, and there is no other measId associated to a measurement object for FR2 (e.g. for measurement reporting). |

*Further Details about the Execution Condition(s) per Target Candidate Frequency*/*Cell*

In one option, a message can include a mapping between measId(s) for CPC per frequency. In other words, there is an execution condition per frequency associated to one or more measId(s).
- In one option the message can be at least one of the following:
   ∘ A message from the S-SN to the MN, such as:
      ▪ SN Change Required and/or;
      ▪ SN Modification Required;
   ∘ An RRC container / inter- node RRC message, such as CG-Config, included in an XnAP message such as:
      ▪ SN Change Required and/or;
      ▪ SN Modification Required;
- In one sub-option, the execution condition per candidate frequency and/or per candidate cell
   ∘ Is encoded such a way that it does not have to be interpreted by the MN, e.g. the execution condition is defined as new field to be added by the MN within the CPC configuration in MN format;
   ∘ Is encoded such a way that it needs to be interpreted by the MN, e.g. encoded as multiple MeasID(s), i.e. as multiple integers.
- In one sub-option the execution condition per frequency is transmitted:
   ∘ within the XnAP message;
      ▪ One benefit of including the execution condition in the XnAP message is that the MN may include some of the content of CG-Config received in SN Change Required directly into the SN Addition Request to the T-SN candidate, such as candidateCellInfoListSN. In that case, not including the execution condition in candidateCellInfoListSN means that the T-SN will not be informed of that, as it is not needed. Another benefit is that it avoids the need to define a new field in the CPC configuration in MN format that is used to configure the UE, i.e. the MN can interpret the measId(s) as one or more integers of a given execution condition and set the value of the execution condition for a given target candidate PSCell (i.e., no need to define a new execution condition field in RRC specifications for the MN).
   ∘ within the CG-Config (inter-node RRC container).

In one option, the mapping between measId(s) for CPC per frequency is included in the candidateCellInfoListSN, as one of the configurations in MeasResultList2NR (where each instance has an associated frequency, like ssbFrequency and/or refFreqCSI-RS).

One example is shown below, with the case the execution condition per frequency is transparent to the MN. Or, in more general terms, being within the container as something to be included in the MN generated CPC as a new field, enables the UE to distinguish between an execution condition/ measId(s) associated to an MCG MeasConfig and an execution condition/ measId(s) associated to an SCG MeasConfig, i.e. the new field becomes the indicator to the UE that the execution condition / measId(s) is associated to an SCG MeasConfig (i.e., the measId(s) are configured in the SCG MeasConfig). More details are given later in the UE actions.

### - CG-Config

[...] Direction: Secondary gNB or eNB to master gNB or eNB, alternatively CU to DU.

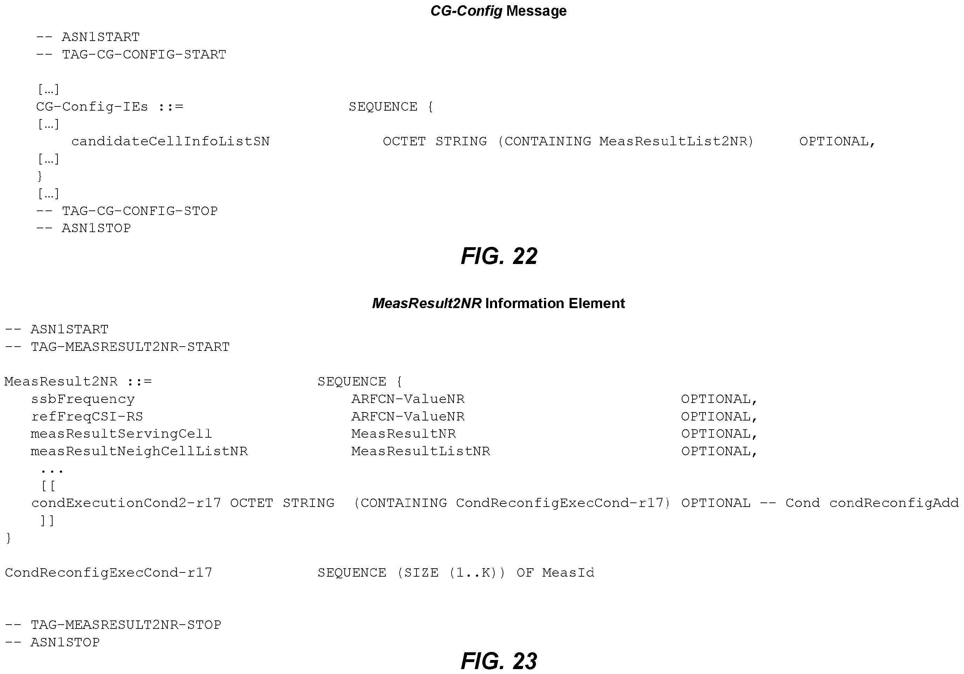

Figure 22 illustrates an example of the *CG-Config* message according to embodiments described herein. Field descriptions are as follows:

| ***CG-Config* field descriptions** |
|---|
| ***candidateCellInfoListSN*** |
| Contains information regarding cells that the source secondary node suggests the target secondary gNB to consider configuring. |

### - MeasResult2NR

The IE *MeasResult2NR* contains measurements on NR frequencies. That may contain the configuration of the execution condition per frequency for CPC.

Figure 23 illustrates an example of the *MeasResult2NR* IE according to embodiments described herein. Field descriptions are as follows:

| ***MeasResult2NR* field descriptions** |
|---|
| ***condExecutionCond2*** |
| The execution condition of a conditional reconfiguration for target candidates in the frequency indicated by *ssbFrequency,* as configured by the SN. |

The fact that the condition is transparent does not necessarily mean the T-SN needs to receive it via the SN Addition Request from the MN, i.e., the MN could remove the field before transmitting to the T-SN.

In another option, assuming there needs to be another round trip/ procedure between the S-SN and the MN after the T-SN determines which PSCells to configuration for CPC (i.e. an additional procedure), so the MN can obtain the SCG MeasConfig from the S-SN for the selected candidate PSCell and/or selected frequencies by the T-SN candidate, the mapping between the execution condition (e.g. 1 or multiple measId(s)) and a candidate PSCell may not need to be provided in this first step i.e. not needed in the SN Change Required. Instead, that could be provided in the next round trip/ procedure, together with the SCG MeasConfig. The benefit would be if the MN typically includes the CG-Config container from the S-SN in the SN Addition Request, without any change, it would not need to include the execution conditions (not supposed to be interpreted by the T-SN), e.g. condExecutionCond2. This is further explained in the other set of embodiments. And, the S-SN would not need to generate unnecessary configurations (i.e. execution conditions and SCG MeasConfig for CPC) that may anyways need to be updated (based on which candidate cells the T-SN has accepted).

Another example is shown below, with the case the execution condition is set per frequency and per cell, transparent to the MN. For example, the execution condition can be configured within measResultNeighCellListNR, as shown below:

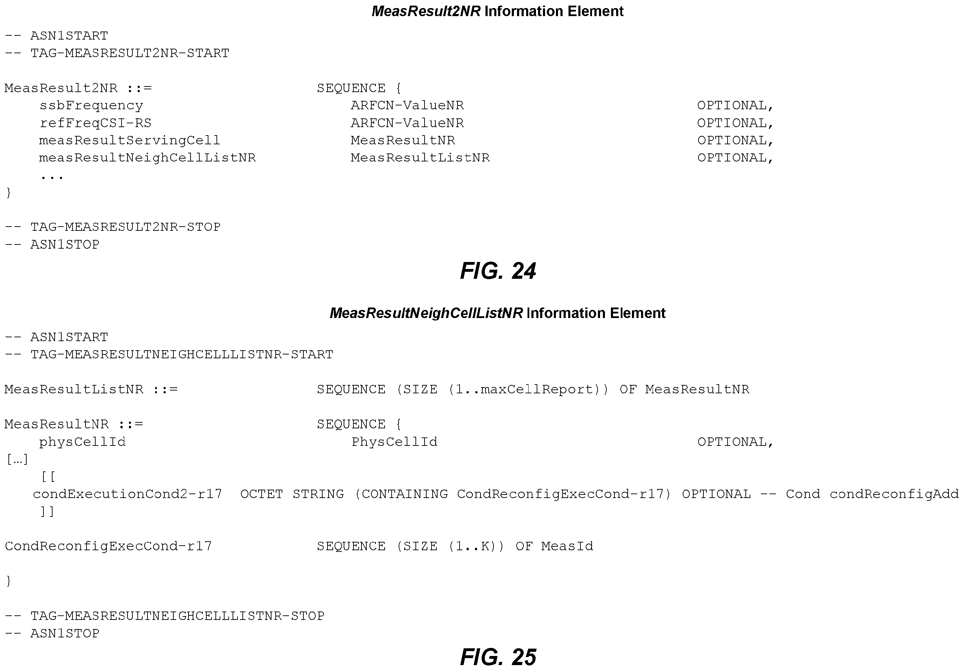

Figure 24 illustrates an example of the *MeasResult2NR* IE according to embodiments described herein. Figure 25 illustrates an example of the *MeasResultNeighCellListNR* IE according to embodiments described herein. Field descriptions are as follows:

| ***MeasResult2NR* field descriptions** |
|---|
| ***condExecutionCond2*** |
| The execution condition of a conditional reconfiguration for a target candidate of PCI indicated by physCellId in the frequency indicated by *ssbFrequency,* as configured by the SN. |

*New Field for the Execution Condition(s) Indicating the measld is in SCG MeasConfig*

The method comprises the UE determining whether a given measId referred in the execution condition configuration for CPC is associated to an SCG measConfig or to an MCG measConfig, based on the field configuring the execution condition.

Figure 16 shows an example of how the ASN.1 for the CPC could be modified to introduce a new field for the execution condition.

In other words, the IE CondReconfigToAddMod is enhanced with a new field indicating an execution condition, e.g. condExecutionCond2-r17, defined as an optional field. This means that when a target candidate is configured in CondReconfigToAddMod to the UE, that can either include the field condExecutionCond-r16 or the field condExecutionCond2-r17, wherein each of them includes a pointer to one or more (e.g., 2) MeasID(s), as shown above. The method comprises the UE receiving one of these two fields and based on the one it receives, determining whether the associated/ pointed MeasId(s) are configured in SCG MeasConfig or MCG MeasConfig.

If the UE receives in the CondReconfigToAddMod the legacy field condExecutionCond-r16, the associated measId(s) are the ones referred in the MCG MeasConfig. Else, If the UE receives in the CondReconfigToAddMod the new field, e.g. condExecutionCond2-r17, the associated measId(s) are the ones referred in the SCG MeasConfig. That is a way to use the new field as a way to indicate to the UE that despite the fact that the CondReconfigToAddMod is part of the MCG configuration, as in Conditional Handover, Conditional PSCell Addition, MN/SN-initiated Conditional PSCell Change, the configuration for the measurements is within the SCG MeasConfig.

**Step 2020:** The UE 2006 confirms the configuration of CPC with an RRCReconfigurationComplete or equivalent message.

**Step 2022:** The MN 2002 replies to S-SN 2002 with an S-NODE CHANGE CONFIRM message, confirming the configuration of CPC. In one option, after the MN 2002 receives the RRCReconfigurationComplete message from the UE 2006 (or equivalent message that acks the reception of the CPC configuration), the SN Change Confirm may include an indication of the selected cells and/or frequencies by the T-SN 2004.

### Further Description

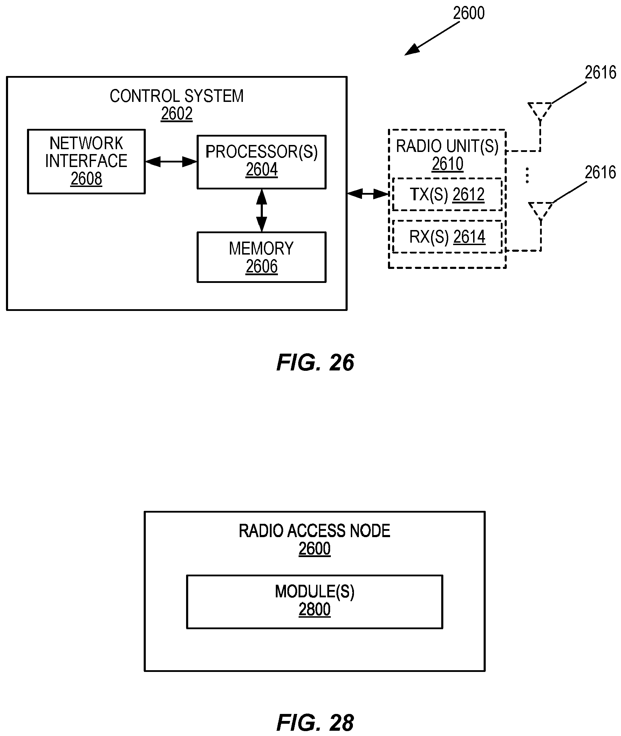

Figure 26 is a schematic block diagram of a radio access node 2600 according to some embodiments of the present disclosure. Optional features are represented by dashed boxes. The radio access node 2600 may be, for example, a base station 502 or 506 or a network node that implements all or part of the functionality of the base station 502 or gNB described herein. As illustrated, the radio access node 2600 includes a control system 2602 that includes one or more processors 2604 (e.g., Central Processing Units (CPUs), Application Specific Integrated Circuits (ASICs), Field Programmable Gate Arrays (FPGAs), and/or the like), memory 2606, and a network interface 2608. The one or more processors 2604 are also referred to herein as processing circuitry. In addition, the radio access node 2600 may include one or more radio units 2610 that each includes one or more transmitters 2612 and one or more receivers 2614 coupled to one or more antennas 2616. The radio units 2610 may be referred to or be part of radio interface circuitry. In some embodiments, the radio unit(s) 2610 is external to the control system 2602 and connected to the control system 2602 via, e.g., a wired connection (e.g., an optical cable). However, in some other embodiments, the radio unit(s) 2610 and potentially the antenna(s) 2616 are integrated together with the control system 2602. The one or more processors 2604 operate to provide one or more functions of a radio access node 2600 as described herein. In some embodiments, the function(s) are implemented in software that is stored, e.g., in the memory 2606 and executed by the one or more processors 2604.

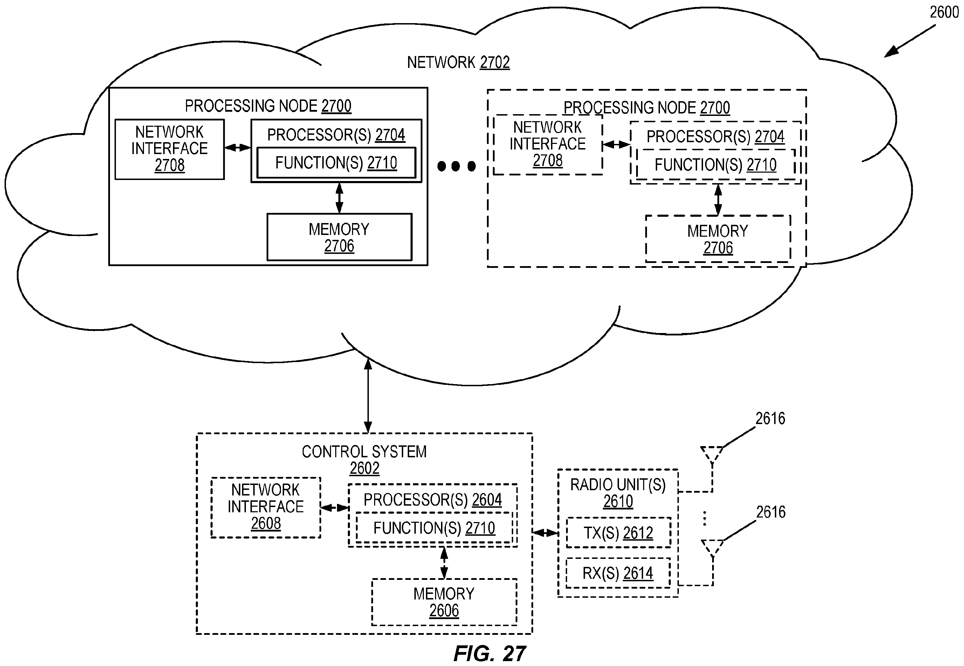

Figure 27 is a schematic block diagram that illustrates a virtualized embodiment of the radio access node 2600 according to some embodiments of the present disclosure. This discussion is equally applicable to other types of network nodes. Further, other types of network nodes may have similar virtualized architectures. Again, optional features are represented by dashed boxes.

As used herein, a "virtualized" radio access node is an implementation of the radio access node 2600 in which at least a portion of the functionality of the radio access node 2600 is implemented as a virtual component(s) (e.g., via a virtual machine(s) executing on a physical processing node(s) in a network(s)). As illustrated, in this example, the radio access node 2600 may include the control system 2602 and/or the one or more radio units 2610, as described above. The control system 2602 may be connected to the radio unit(s) 2610 via, for example, an optical cable or the like. The radio access node 2600 includes one or more processing nodes 2700 coupled to or included as part of a network(s) 2702. If present, the control system 2602 or the radio unit(s) are connected to the processing node(s) 2700 via the network 2702. Each processing node 2700 includes one or more processors 2704 (e.g., CPUs, ASICs, FPGAs, and/or the like), memory 2706, and a network interface 2708.

In this example, functions 2710 of the radio access node 2600 described herein are implemented at the one or more processing nodes 2700 or distributed across the one or more processing nodes 2700 and the control system 2602 and/or the radio unit(s) 2610 in any desired manner. In some particular embodiments, some or all of the functions 2710 of the radio access node 2600 described herein are implemented as virtual components executed by one or more virtual machines implemented in a virtual environment(s) hosted by the processing node(s) 2700. As will be appreciated by one of ordinary skill in the art, additional signaling or communication between the processing node(s) 2700 and the control system 2602 is used in order to carry out at least some of the desired functions 2710. Notably, in some embodiments, the control system 2602 may not be included, in which case the radio unit(s) 2610 communicate directly with the processing node(s) 2700 via an appropriate network interface(s).

In some embodiments, a computer program including instructions which, when executed by at least one processor, causes the at least one processor to carry out the functionality of radio access node 2600 or a node (e.g., a processing node 2700) implementing one or more of the functions 2710 of the radio access node 2600 in a virtual environment according to any of the embodiments described herein is provided. In some embodiments, a carrier comprising the aforementioned computer program product is provided. The carrier is one of an electronic signal, an optical signal, a radio signal, or a computer readable storage medium (e.g., a non-transitory computer readable medium such as memory).

Figure 28 is a schematic block diagram of the radio access node 2600 according to some other embodiments of the present disclosure. The radio access node 2600 includes one or more modules 2800, each of which is implemented in software. The module(s) 2800 provide the functionality of the radio access node 2600 described herein. This discussion is equally applicable to the processing node 2700 of Figure 27 where the modules 2800 may be implemented at one of the processing nodes 2700 or distributed across multiple processing nodes 2700 and/or distributed across the processing node(s) 2700 and the control system 2602.

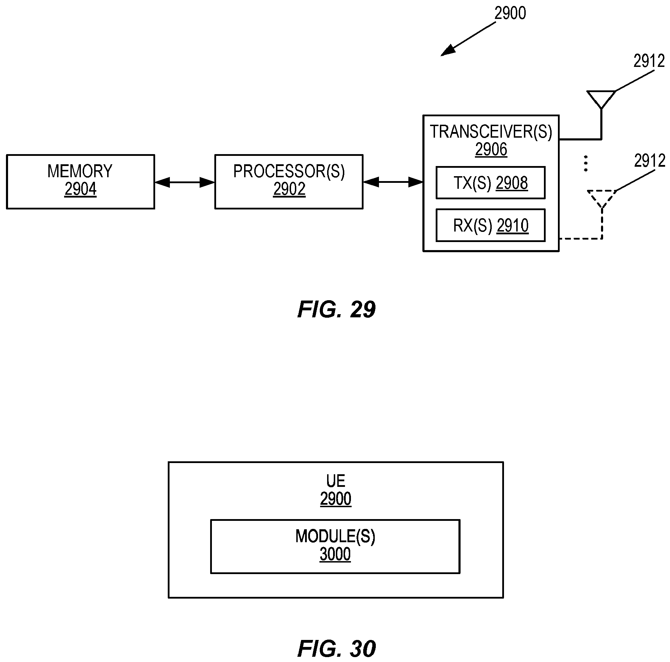

Figure 29 is a schematic block diagram of a wireless communication device 2900 according to some embodiments of the present disclosure. As illustrated, the wireless communication device 2900 includes one or more processors 2902 (e.g., CPUs, ASICs, FPGAs, and/or the like), memory 2904, and one or more transceivers 2906 each including one or more transmitters 2908 and one or more receivers 2910 coupled to one or more antennas 2912. The transceiver(s) 2906 includes radio-front end circuitry connected to the antenna(s) 2912 that is configured to condition signals communicated between the antenna(s) 2912 and the processor(s) 2902, as will be appreciated by on of ordinary skill in the art. The processors 2902 are also referred to herein as processing circuitry. The transceivers 2906 are also referred to herein as radio circuitry. In some embodiments, the functionality of the wireless communication device 2900 described above may be fully or partially implemented in software that is, e.g., stored in the memory 2904 and executed by the processor(s) 2902. Note that the wireless communication device 2900 may include additional components not illustrated in Figure 29 such as, e.g., one or more user interface components (e.g., an input/output interface including a display, buttons, a touch screen, a microphone, a speaker(s), and/or the like and/or any other components for allowing input of information into the wireless communication device 2900 and/or allowing output of information from the wireless communication device 2900), a power supply (e.g., a battery and associated power circuitry), etc.

In some embodiments, a computer program including instructions which, when executed by at least one processor, causes the at least one processor to carry out the functionality of the wireless communication device 2900 according to any of the embodiments described herein is provided. In some embodiments, a carrier comprising the aforementioned computer program product is provided. The carrier is one of an electronic signal, an optical signal, a radio signal, or a computer readable storage medium (e.g., a non-transitory computer readable medium such as memory).

Figure 30 is a schematic block diagram of the wireless communication device 2900 according to some other embodiments of the present disclosure. The wireless communication device 2900 includes one or more modules 3000, each of which is implemented in software. The module(s) 3000 provide the functionality of the wireless communication device 2900 described herein.

Any appropriate steps, methods, features, functions, or benefits disclosed herein may be performed through one or more functional units or modules of one or more virtual apparatuses. Each virtual apparatus may comprise a number of these functional units. These functional units may be implemented via processing circuitry, which may include one or more microprocessor or microcontrollers, as well as other digital hardware, which may include Digital Signal Processor (DSPs), special-purpose digital logic, and the like. The processing circuitry may be configured to execute program code stored in memory, which may include one or several types of memory such as Read Only Memory (ROM), Random Access Memory (RAM), cache memory, flash memory devices, optical storage devices, etc. Program code stored in memory includes program instructions for executing one or more telecommunications and/or data communications protocols as well as instructions for carrying out one or more of the techniques described herein. In some implementations, the processing circuitry may be used to cause the respective functional unit to perform corresponding functions according one or more embodiments of the present disclosure.

While processes in the figures may show a particular order of operations performed by certain embodiments of the present disclosure, it should be understood that such order is exemplary (e.g., alternative embodiments may perform the operations in a different order, combine certain operations, overlap certain operations, etc.).

Those skilled in the art will recognize improvements and modifications to the embodiments of the present disclosure. All such improvements and modifications are considered within the scope of the concepts disclosed herein.

## Claims

1. A method for configuring measurements related to inter-Secondary Node, SN, conditional reconfiguration, the method comprising:
• at a Source Secondary Node, S-SN, (1100; 1700; 1800):
∘ sending (1108; 1708; 1808), to a Master Node, MN, (1102; 1702; 1802), a SN Change Required message comprising:
▪ an indication that the SN Change Required message is for conditional reconfiguration; and
▪ information about one or more target candidate cells of a target candidate SN (1104; 1704; 1804);
• at the MN (1102; 1702; 1802):
∘ receiving (1108; 1708; 1808) the SN Change Required message from the S-SN (1100; 1700; 1800);
∘ sending (1110; 1712; 1812) a SN Addition Request message to the target candidate SN (1104; 1704; 1804), the SN Addition Request message comprising:
▪ an indication that the SN Addition Request message is for conditional reconfiguration; and
▪ information about the one or more target candidate cells of the target candidate SN (1104; 1704; 1804);
∘ receiving an acknowledgement message from the target candidate SN;
∘ sending a RRC Reconfiguration message to a User Equipment, UE;
• At the UE:
∘ Receiving an RRC Reconfiguration message;
∘ performing measurements for each measurement identity, measId, received in the SCG MeasConfig if:
- the report type is condTriggerConfig for the associated reportConfig; and
- the measId is set to at least one condExecutionCond associated to a condReconfigId, wherein the condExecutionCond is part of the conditional reconfiguration configuration.

2. The method of claim 1 wherein the SN Change Required message comprises a Secondary Cell Group, SCG, measurement configuration for conditional reconfiguration, SCG MeasConfig.

3. The method of claim 1 or 2, wherein the RRC Reconfiguration sent from the MN comprises conditional configuration.

4. The method of any of claims 1 to 3 further comprising:
• at the target candidate SN (1704; 1804):
∘ receiving (1712; 1812) the SN Addition Request message from the MN (1702; 1802); and
∘ sending (1714; 1814) a SN Additional Request acknowledgement message to the MN (1702; 1802), the SN Additional Request acknowledgement message comprising information about one or more select target candidate cells from among the one or more target candidate cells of the target candidate SN (1704; 1804);
• at the MN (1702):
∘ receiving (1714; 1814) the SN Additional Request acknowledgement message from the target candidate SN (1704; 1804).

5. The method according to any of claims 1 to 4 comprising the step of:
determining at the MN (1102; 1702; 1802) the execution conditions to be provided to the UE based on selected cells and or frequencies by the target candidate SN (1104; 1704; 1804).

6. The method according to any of claims 1 to 5 comprising the step of:
the RRC Reconfiguration sent from the MN to the UE comprising the received SCG measurement configuration for conditional configuration; and
the RRC Reconfiguration sent from the MN to the UE further comprising the determined execution conditions and associated measId(s).

7. The method according to any of the claims above wherein:
The RRC Reconfiguration sent from the MN to the UE comprises an *ConditionalReconfiguration* Information Element, IE.

8. The method according to any of the claims above comprising the step of:
At the UE: the step of ignoring measId(s) not referred to in the RRC Reconfiguration sent from the MN to the UE comprises:
performing measurements for each measurement identity, measId, received in the SCG MeasConfig if:
- the report type is condTriggerConfig for the associated reportConfig; and
- the measId is set to at least one condExecutionCond associated to a condReconfigId, wherein the condExecutionCond is part of the conditional reconfiguration received in the RRC Reconfiguration sent from the MN to the UE.

9. The method according to any of the claims above, wherein:
the information about one or more target candidate cells of a target candidate SN (1104; 1704; 1804) included in the SN Change Required message from the S-SN (1100; 1700; 1800) comprises at least one measurement Identity, measId, having reporting configuration set to condTriggerConfig-r16.

10. The method of any of claims 1 to 9 wherein the SN Change Required comprises a SCG-Config Information Element, IE, that comprises the information about the one or more target candidate cells of the target candidate SN (1104; 1704; 1804).

11. The method of any of claims 1 to 10 wherein the information about the one or more select target candidate cells comprises an Absolute Radio Frequency Channel Number, AFCN, and a physical cell identity, ID, for each of the one or more select target candidate cells.

12. The method of any of claims 1 to 11 wherein the measurement configuration information related to the conditional reconfiguration comprises one or more measurement identities, measIDs, associated to one or more respective execution conditions for the one or more select target candidate cells.
